# EUROPEAN PATENT SPECIFICATION

(11) **EP 4 440 190 B1**
(45) Date of publication and mention of the grant of the patent: **26.11.2025**
(21) Application number: 21969308.2
(22) Date of filing: 28.12.2021
(51) Int. Cl.: H04W 28/22, G06F 13/42

(54) **WIRED DATA TRANSMISSION METHOD AND RELATED WIRED DATA TRANSMISSION APPARATUS**
VERFAHREN ZUR ÜBERTRAGUNG VERDRAHTETER DATEN UND ZUGEHÖRIGE VORRICHTUNG ZUR ÜBERTRAGUNG VERDRAHTETER DATEN
PROCÉDÉ DE TRANSMISSION DE DONNÉES FILAIRE ET APPAREIL DE TRANSMISSION DE DONNÉES FILAIRE ASSOCIÉ

(43) Date of publication of application: 02.10.2024
(73) Proprietor: Huawei Technologies Co., Ltd., Shenzhen, Guangdong 518129 (CN)
(72) Inventor: NIE, Er, Shenzhen, Guangdong 518129 (CN); CHENG, Chuanning, Shenzhen, Guangdong 518129 (CN)
(74) Representative: Goddar, Heinz J.
(86) International application number: PCT/CN2021/141865
(87) International publication number: WO 2023/122924

(56) References cited:
- CN-A- 102 131 248
- CN-A- 103 546 229
- CN-A- 110 248 341
- CN-A- 112 564 851
- US-A1- 2014 281 067
- US-A1- 2016 127 245
- PCI-SIG: "PCI Express Base Specification Revision 5.0 Version 1.0 - Chapter 4", 22 May 2019 (2019-05-22), pages 1 - 1299, XP093231214, Retrieved from the Internet <URL:https://picture.iczhiku.com/resource/eetop/SYkDTqhOLhpUTnMx.pdf> [retrieved on 20241204]

## Description

### TECHNICAL FIELD

This application relates to the field of wired communication technologies, and in particular, to a wired data transmission method and a related wired data transmission apparatus.

### BACKGROUND

With development of wired communication technologies, data transmission is required in increasingly more application scenarios. To meet different I/O bandwidth requirements of different services, in designs of related protocols for high-speed data transmission, a transmission rate at a physical layer of a transmission interface may be changed among several fixed frequencies. For example, in peripheral component interconnect express (peripheral component interface express, PCIe) 6.0, a link may be set up at any rate of 2.5 GT/s, 5 GT/s, 8 GT/s, 16 GT/s, 32 GT/s, or 64 GT/s depending on different capabilities supported by interconnected devices.

However, in conventional designs of related protocols for high-speed data transmission, only these fixed rates can be selected for changing, that is, negotiation is made only on one of the six rates (for example, 2.5 GT/s, 5 GT/s, 8 GT/s, 16 GT/s, 32 GT/s, or 64 GT/s). Consequently, when a physical link is short and a loss is small, a maximum negotiated rate is 64 GT/s due to a limitation of the fixed rates, but a current link can support a higher rate, which causes a bandwidth waste. When the physical link is long and the loss is slightly beyond a drive capability of a serializer (SerDes), a clock data recovery (clock data recovery, CDR) component, a retimer (retimer), or the like are needed to relay and amplify a signal. However, the addition of the component CDR or retimer greatly increases product costs and power consumption. In addition, in an extremely low-delay application scenario, an operating frequency of the SerDes and a system bus frequency of a system on chip (system on chip, SoC) need to maintain a specific proportion relationship or even be synchronous. In this scenario, because the system bus frequency of the SoC often changes in a small range, it is required that an operating frequency of a high-speed interface may not be fixed, to reduce a delay of asynchronous processing of the high-speed interface. However, existing protocols related to high-speed data transmission cannot meet this requirement.

Therefore, how to avoid that a rate of a transmission link is changed among only several fixed frequencies is an urgent problem to be resolved.

US 2014/281067 A1 describes a phase 0 of a PCIe link training and equalization procedure. A root complex device and an endpoint device are coupled to each other via differential pairs of a communications link. Data may be transferred between the devices at a first data transmission rate. The rate at which data is transmitted in phase 0 is less than or equal to a first maximum data transmission rate associated with the root complex device and a second maximum data transmission rate associated with the endpoint device. During phase 0, both devices advertise the maximum data transmission rate associated with each device. In addition, both devices make the link operational enough at the PCIe Gen 1 or PCIe Gen2 at a certain BER. For example, before transitioning to the next phase of the link training and equalization procedure, both devices must exhibit that they may transmit signals with a minimum BER of 10-4. If the target BER is not reached, the link may operate at a lower data transmission rate.

The "PCI Express Base Specification", revision 5.0, version 1.0, May 28, 2019, describes the PCI Express architecture, interconnect attributes, fabric management, and the programming interface required to design and build systems and peripherals that are compliant with the PCI Express Specification. It is described that a link will initially train to an LO state at a 2.5 GT/s data rate even if both sides are capable of operating at a data rate greater than 2.5 GT/s. Supported higher data rates are advertised in training sequence (TS) ordered sets. The other side's speed capability is registered during the Configuration. Complete substate. Based on the highest supported common data rate, either side can initiate a change in speed from the LO state by transitioning to recovery.

### SUMMARY

This application provides a wired data transmission method and a related wired data transmission apparatus, to randomly change a transmission rate of a data link for wired data transmission in a specific range, and reduce a communication resource waste. In an extremely low-delay scenario, a transmission rate of a transmission interface may be consistent with a transmission rate of a system bus, to reduce a cross-clock-domain asynchronous processing delay.

According to a first aspect, an embodiment of this application provides a wired data transmission method, applied at a first end. Data transmission is performed between the first end and a second end over a first data link, and the first data link is a serial data link or a parallel data link. The method includes: receiving a first training bitstream sent by the second end, where the first training bitstream includes a second rate range, and the second rate range belongs to a transmission rate range supported when the second end receives data over the first data link; sending a second training bitstream to the second end, where the second training bitstream includes a first rate, and the first rate belongs to the second rate range; and sending the data to the second end at the first rate over the first data link.

In the conventional technology, a transmission rate of a data link set up at a physical layer may be changed among only several fixed rates. For example, if a source end supports transmission rates of 5 GT/s, 8 GT/s, and 16 GT/s, and a destination end supports transmission rates of 5 GT/s and 8 GT/s, a transmission rate from the source end to the destination end can only be 5 GT/s or 8 GT/s. Therefore, when a current link can support a higher rate, a bandwidth waste is caused. For example, the current link can transmit data at a rate of 8.5 GT/s, but the data can be transmitted only at a maximum rate of 8 GT/s in a current manner, which causes a bandwidth waste. In addition, because the transmission rate can change among only the several fixed rates, the transmission rate of the data link cannot be adaptively adjusted based on changes of a loss of the link and a rate of a system bus, which causes a resource waste and poor communication quality. Therefore, the wired data transmission method provided in this embodiment of this application can support changing of the transmission rate of the data link in a specific range, to reduce a communication resource waste. In an extremely low-delay scenario, a transmission rate of a transmission interface may be consistent with a transmission rate of a system bus, to reduce a cross-clock-domain asynchronous processing delay. It is noted in advance that the first data link is a wired data transmission link that connects a transmit interface at the first end and a receive interface at the second end, the first data link may be a serial data link or a parallel data link, and data is transmitted from the first end to the second end. Therefore, in the first data link, the first end may be understood as a source end of data transmission, and the second end may be understood as a destination end of data transmission. The wired data transmission method provided in this embodiment of this application is applied at the first end (which may also be understood as the source end of data transmission), and data transmission is performed between the first end and the second end over the first data link. The second end corresponds to the second rate range, and the second rate range belongs to the transmission rate range supported when the second end receives the data over the first data link. The first end may receive, in a link training process, the first training bitstream sent by the second end. The first training bitstream includes the second rate range, that is, the second end declares, in a form of a bitstream, to the first end the transmission rate range supported by the second end in the first data link. The first end decides the first rate, and negotiates with or notifies the second end to transmit the data at the first rate over the first data link, that is, the first end sends the second training bitstream to the second end. The second training bitstream includes the first rate, and the first rate is any rate in the second rate range. The second training bitstream may be understood as a training bitstream used to request or notify the second end, to request or notify the second end that the first end transmits the data to the second end at the first rate. After the first end sends the first rate to the second end in a form of a bitstream, data transmission may be performed between the first end and the second end at the first rate. For example, after the second end agrees to transmit the data at the first rate, the first data link may enter a link setup success state from a link training state, and data transmission may be performed between the first end and the second end at the first rate over the first data link after the link is successfully set up. In addition, the first rate is a rate in the second rate range. For example, when the transmission rate supported by the second end is from 5 GT/s to 9 GT/s, the first rate may be 8.5 GT/s or 9 GT/s. Therefore, in comparison with the conventional technology in which data can be transmitted only at a fixed rate, in this embodiment of this application, data can be transmitted at a rate, in a rate range supported by the second end, actually supported by the first data link, to reduce a waste of bandwidth of the first data link. In addition, for example, in an extremely low-delay scenario, a transmission rate between the first end and the second end may be adaptively adjusted in the second rate range based on changes of the loss of the link, the rate of the system bus, and the like. Therefore, the transmission rate of the transmission interface is consistent with the transmission rate of the system bus, to reduce a cross-clock-domain asynchronous processing delay.

In a possible implementation, the second rate range includes multiple enumerated transmission rates.

In this embodiment of this application, compared with several fixed rates in the conventional technology, the second rate range may include the multiple enumerated transmission rates. The multiple enumerated transmission rates may be multiple transmission rates, obtained through enumeration, supported when the data is received over the first data link. The multiple enumerated transmission rates are sufficient, so that all of the multiple enumerated transmission rates can form the second rate range.

According to the first aspect, the first end corresponds to a first rate range, and the first rate range is a transmission rate range supported when the first end sends the data over the first data link. The first rate is a rate determined based on a target rate range, and the target rate range is an intersection set of the first rate range and the second rate range.

A rate range, namely, the target rate range, jointly supported by the first end and the second end in the first data link may be determined based on the first rate range and the second rate range. For example, a transmission rate range supported by the first end is from 5 GT/s to 16 GT/s, and a transmission rate range supported by the second end is from 5 GT/s to 9 GT/s. The transmission rate range jointly supported by the first end and the second end may be from 5 GT/s to 9 GT/s. The first rate is a rate in the target rate range, so that data transmission can be performed between the first end and the second end over the first data link at a rate jointly supported by the two ends, to reduce a waste of bandwidth of the first data link.

In a possible implementation, the second rate range is a transmission rate range supported when the second end receives the data over the first data link; or when the first end is connected to the second end via a repeater, the second rate range is a transmission rate range jointly supported by the second end and the repeater when the second end and the repeater transmit data over the first data link, and the repeater is configured to forward, to the second end, the data sent by the first end.

In this embodiment of this application, the second rate range may be a rate transmission range that is determined by the second end and that is supported by the second end in the first data link, or may be a rate transmission range that is jointly determined by the repeater and the second end and that is supported by the repeater and the second end in the first data link. The repeater in the first data link is configured to forward, to the second end, the data sent by the first end. The repeater may reduce some inter-symbol interference in the first data link, but may also adjust a rate at which the second end receives the data. Therefore, in a communication system architecture in which the repeater exists, the second rate range may be jointly determined by the repeater and the second end.

In a possible implementation, the first training bitstream further includes second declaration information, and the second declaration information includes information that the second end supports data transmission at any rate in the second rate range. The method further includes: sending a third training bitstream to the second end. The third training bitstream includes first declaration information, and the first declaration information includes information that the first end supports data transmission at any rate in the first rate range.

In this embodiment of this application, the first end and the second end may declare, to each other, that the first end and the second end have a capability of supporting any transmission rate in the data link. If the first end and the second end declare that the transmission rate can be supported, the transmission rate of the first data link can be negotiated to any rate in a rate range jointly supported by the first end and the second end. If either the first end or the second end cannot support transmission at any transmission rate in the data link, the transmission rate of the first data link cannot be negotiated to any rate in the rate range jointly supported by the first end and the second end. In addition, it should be noted that the third training bitstream may further include the first rate range. It should further be noted that the first end is used as an example, and the declaration information and the rate range that are supported by the first end may be simultaneously sent via one training bitstream (for example, the third training bitstream), or may be separately sent via different training bitstreams.

In a possible implementation, the first rate is a highest rate in the target rate range.

In this embodiment of this application, the first end determines, from the rate transmission range jointly supported by the two ends, that the highest rate is the transmission rate of the first data link, to fully utilize the bandwidth of the first data link, reduce a communication resource waste, and reduce data transmission time.

In a possible implementation, before the sending the data to the second end at the first rate over the first data link, the method further includes: receiving a first response sent by the second end, where the first response includes response information corresponding to the second training bitstream.

In this embodiment of this application, it may be understood that the second training bitstream may be a training bitstream for requesting the second end, and is used to request the second end that the first end transmits the data to the second end at the first rate. When the second end agrees with the second training bitstream, the first end may receive the first response sent by the second end. The first response includes the response information corresponding to the second training bitstream, and the response information indicates that the second end agrees with data transmission at the first rate by the first end. In addition, the response may alternatively be a response sent in a form of a training bitstream.

In a possible implementation, the second training bitstream further includes a speed changing identifier corresponding to the first rate, and the speed changing identifier indicates to adjust the transmission rate of the first data link.

In this embodiment of this application, when the first end sends the second training bitstream to the second end, the second end may receive bitstream information (for example, a TSB bitstream). In this case, the second end may determine, based on the bitstream information, the first rate and the first speed changing identifier corresponding to the first rate, and control, based on the first speed changing identifier, a transmission rate, corresponding to the first data link, of the received data to be the first rate.

According to the first aspect, the method further includes: obtaining a corresponding first bit error rate when the data is sent to the second end at the first rate over the first data link; and when the first bit error rate is in a preset range, sending the data to the second end at the first rate over the first data link.

The corresponding first bit error rate when the data is sent to the second end at the first rate over the first data link is obtained. A higher bit error rate indicates a larger loss of the first data link on which transmission is performed at the first rate. Therefore, when the first bit error rate is in the preset range, it proves that the loss of the first data link on which transmission is performed at the first rate is in a specific range. In this case, data transmission may be performed between the first end and the second end at the first rate over the first data link.

According to the first aspect, the method further includes: when the first bit error rate exceeds the preset range, sending the data to the second end at a second rate over the first data link, where the second rate is a rate in the target rate range and is less than the first rate.

When the first bit error rate exceeds the preset range, the transmission rate of the first data link may be decreased to the second rate, to ensure quality of communication between the first end and the second end. In addition, the second rate is any rate in the target rate range and is less than the first rate, to fully utilize the bandwidth of the first data link, and save communication resources.

According to the first aspect, the sending the data to the second end at a second rate over the first data link includes: sending a fourth training bitstream to the second end, where the fourth training bitstream includes the second rate; and sending the data to the second end at the second rate over the first data link.

A higher bit error rate indicates a larger loss of the first data link on which transmission is performed at the first rate. Therefore, when the first bit error rate exceeds the preset range, it proves that a loss of data transmission at the first rate by the first end is high. In this case, the transmission rate needs to be re-decided to reduce the loss, and the first end needs to negotiate with the second end again. Therefore, after deciding the second rate, the first end may send the fourth training bitstream to the second end. The fourth training bitstream may be understood as a training bitstream used to request or notify the second end, to request or notify the second end that the first end transmits the data to the second end at the second rate. Therefore, data transmission may be performed between the first end and the second end at the second rate over the first data link.

In a possible implementation, before the sending the data to the second end at a second rate over the first data link, the method further includes: receiving a second response sent by the second end, where the second response includes response information corresponding to the fourth training bitstream.

In this embodiment of this application, it may be understood that the fourth training bitstream may be a training bitstream for requesting the second end, and is used to request the second end that the first end transmits the data to the second end at the second rate. When the second end responds to the fourth training bitstream, the first end may receive the second response sent by the second end. The response information corresponding to the fourth training bitstream may indicate that the second end agrees with data transmission at the second rate by the first end. In addition, the response may alternatively be a response sent in a form of a training bitstream.

In a possible implementation, the fourth training bitstream further includes a speed changing identifier corresponding to the second rate.

In this embodiment of this application, the fourth training bitstream is used to request the second end to receive, at the second rate over the first data link, the data sent by the first end. When the first end sends the fourth training bitstream to the second end, the second end may receive bitstream information (for example, a TSB bitstream). In this case, the second end may determine, based on the bitstream information, the second rate and the second speed changing identifier corresponding to the second rate, and control, based on the second speed changing identifier, a transmission rate, corresponding to the first data link, of the received data to be the second rate.

In a possible implementation, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

In this embodiment of this application, the target rate range includes the multiple target rate subranges. In other words, it may be understood that the target rate range includes multiple rate ranges with different levels. For example, if the target rate range is from 2.5 GT/s to 64 GT/s, the target rate range may be divided into four target rate subranges: 2.5 GT/s to 8 GT/s, 8 GT/s to 16 GT/s, 16 GT/s to 32 GT/s, and 32 GT/s to 64 GT/s. The first rate may belong to a first level from 32 GT/s to 64 GT/s. When the bit error rate corresponding to the first rate exceeds a preset threshold, it indicates that a link loss corresponding to the first rate is large, and the first rate may be decreased to reduce the loss. Therefore, the second rate may be a rate that is less than the first rate and that is in the first level from 32 GT/s to 64 GT/s, or may be a rate in a second level from 16 GT/s to 32 GT/s.

According to the first aspect, the first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

The fourth training bitstream may include the adjustment information, so that when adjusting the rate based on the first rate, the second end may adjust the rate by using the step as a unit for adjusting the transmission rate. The second rate may be obtained by adding sizes of one or more target steps to or subtracting sizes of one or more target steps from the first rate. This rate adjustment manner allows the rate to change not merely among several fixed rates. Therefore, in this application, bandwidth of the data link can be fully utilized, and a communication resource waste can be reduced. In addition, it should be noted that the second end is used as an example, and the second declaration information, the second rate range, and/or the second step set that are supported by the second end may be simultaneously sent via one training bitstream (for example, the first training bitstream), or may be separately sent via different training bitstreams.

**In** a possible implementation, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set.

**In** this embodiment of this application, the first end may determine the target step based on the target step set. The target step set is a step set that is jointly supported by the first end and the second end for adjustment, so that the second end adjusts the transmission rate of the first data link to the second rate based on the target step. In addition, the third training bitstream may further include the first step set. It should be noted that the first end is used as an example, and the first declaration information, the first rate range, and/or the first step set that are supported by the first end may be simultaneously sent via one training bitstream (for example, the third training bitstream), or may be separately sent via different training bitstreams.

In a possible implementation, the method further includes: receiving a fifth training bitstream sent by the second end, where the fifth training bitstream includes a third rate, and the third rate is a rate determined based on the target rate range; and sending the data to the second end at the third rate over the first data link.

In this embodiment of this application, in a data transmission process, when the second end needs to change the transmission rate, the second end may send the fifth training bitstream to the first end, to change the current rate to the third rate. In other words, in this embodiment of this application, in the data transmission process, a current transmission rate may still be randomly changed based on a transmission status and the like. Similarly, the fifth training bitstream may be understood as a training bitstream for requesting or notifying the first end, to request or notify the first end to transmit the data to the second end at the third rate. The fifth training bitstream further includes the third rate.

In a possible implementation, before the sending the data to the second end at the third rate over the first data link, the method further includes: sending a third response to the second end, where the third response includes response information corresponding to the fifth training bitstream.

In this embodiment of this application, similarly, the fifth training bitstream may be a training bitstream for requesting the first end, and is used to request the first end to transmit the data to the second end at the third rate. When the first end responds to the fifth training bitstream, the first end may send the third response to the second end. The third response includes response information corresponding to the fifth training bitstream, and it proves that the first end agrees to transmit the data at the third rate to the second end. In addition, the response may alternatively be a response sent in a form of a training bitstream.

In a possible implementation, data transmission is alternatively performed between the first end and the second end over a second data link, and the second data link is a serial data link or a parallel data link corresponding to the first data link. The method further includes: receiving a sixth training bitstream sent by the second end, where the sixth training bitstream includes a fourth rate range, and the fourth rate range belongs to a transmission rate range supported when the second end sends data over the second data link; sending a seventh training bitstream to the second end, where the seventh training bitstream includes a fourth rate; and receiving, at the fourth rate over the second data link, the data sent by the second end.

In this embodiment of this application, the second data link is a link that connects a transmit interface at the second end to a receive interface at the first end, and the data is transmitted from the second end to the first end. Therefore, the second data link is different from the first data link. In the second data link, the second end may be understood as a source end of data transmission, and the first end may be understood as a destination end of data transmission. The first end and the second end may perform data transmission at a highest rate actually supported by the current second data link, to reduce a waste of the bandwidth of the first data link. A transmission rate between the first end and the second end may be adaptively adjusted in a specific range based on changes of the loss of the link and the rate of the system bus, to improve communication quality, and reduce a resource waste. In addition, the first end and the second end may be bidirectionally symmetric, or may be asymmetric. In other words, for the first end, a value of the fourth rate (a rate at which the data is received) of the second data link may be the same as or different from a value of the first rate (a rate at which the data is sent) of the first data link.

In a possible implementation, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range.

In this embodiment of this application, a rate range, namely, the first target rate range, jointly supported by the first end and the second end in the second data link may be determined based on the third rate range and the fourth rate range. The fourth rate is a rate in the first target rate range, so that data transmission can be performed between the first end and the second end over the second data link at a rate jointly supported by the two ends, to reduce a waste of bandwidth of the second data link.

According to a second aspect, an embodiment of this application provides another wired data transmission method, applied at a second end. Data transmission is performed between the second end and a first end over a first data link, the first data link is a serial data link or a parallel data link, the second end corresponds to a second rate range, and the second rate range belongs to a transmission rate range supported when the second end receives data over the first data link. The method includes: sending a first training bitstream to the first end, where the first training bitstream includes the second rate range; receiving a second training bitstream, where the second training bitstream includes a first rate, and the first rate belongs to the second rate range; and receiving, at the first rate over the first data link, the data sent by the first end.

The wired data transmission method provided in this embodiment of this application can support random changing of the transmission rate of the data link in a specific range, to reduce a communication resource waste. In an extremely low-delay scenario, a transmission rate of a transmission interface may be consistent with a transmission rate of a system bus, to reduce a cross-clock-domain asynchronous processing delay. The first data link is a link that connects a transmit interface at the first end to a receive interface at the second end, and the data is transmitted from the first end to the second end. Therefore, in the first data link, the first end may be understood as a source end of data transmission, and the second end may be understood as a destination end of data transmission. The wired data transmission method provided in this embodiment of this application is applied at the second end, and the second end corresponds to the second rate range. The second rate range is a transmission rate range that corresponds to the second end and that is received by the first end, and the second rate range belongs to the transmission rate range supported when the second end receives the data over the first data link. In a link training process, the second end may send the second rate range to the first end, so that the first end may determine, based on the second rate range, that a transmission rate between the first end and the second end is the first rate. Data transmission may be performed between the first end and the second end at the first rate over the first data link. The first rate belongs to the rate range supported by the second end. Therefore, data can be transmitted at a rate, in the rate range supported by the second end, actually supported by the first data link, to reduce a waste of bandwidth of the first data link. In addition, for example, in an extremely low-delay scenario, a transmission rate between the first end and the second end may be adaptively adjusted in the second rate range based on changes of the loss of the link, the rate of the system bus, and the like. Therefore, the transmission rate (namely, the transmission rate between the first end and the second end) of the transmission interface is consistent with the transmission rate of the system bus, to reduce a cross-clock-domain asynchronous processing delay.

In a possible implementation, the second rate range includes multiple enumerated transmission rates.

According to the second aspect, the first end corresponds to a first rate range, and the first rate range is a transmission rate range supported when the first end sends the data over the first data link. The first rate is a rate determined based on a target rate range, and the target rate range is an intersection set of the first rate range and the second rate range.

In a possible implementation, the second rate range is a transmission rate range supported when the second end receives the data over the first data link; or when the first end is connected to the second end via a repeater, the second rate range is a transmission rate range of transmission of data forwarded by the repeater to the first end over the first data link, the second rate range is a transmission rate range jointly supported by the second end and the repeater, and the repeater is configured to forward, to the first end, the data sent by the second end.

In a possible implementation, the first training bitstream further includes second declaration information, and the second declaration information includes information that the second end supports data transmission at any rate in the second rate range. The method further includes: receiving a third training bitstream sent by the first end, where the third training bitstream includes first declaration information, and the first declaration information includes information that the first end supports data transmission at any rate in the first rate range.

In a possible implementation, the first rate is a highest rate in the target rate range.

In a possible implementation, before the receiving, at the first rate over the first data link, the data sent by the first end, the method further includes: sending a first response to the first end, where the first response includes response information corresponding to the second training bitstream.

In a possible implementation, the second training bitstream further includes a speed changing identifier indicating to adjust the transmission rate of the first data link.

According to the second aspect, the method further includes: when a first bit error rate exceeds a preset range, receiving, at a second rate over the first data link, the data sent by the first end, where the first bit error rate is a corresponding first bit error rate when the data is sent to the second end at the first rate over the first data link, and the second rate is a rate in the target rate range and is less than the first rate.

According to the second aspect, the receiving, at a second rate over the first data link, the data sent by the first end includes: receiving a fourth training bitstream, where the fourth training bitstream includes the second rate; and receiving, at the second rate over the first data link, the data sent by the first end.

In a possible implementation, the method further includes: sending a second response to the first end, where the second response includes response information corresponding to the fourth training bitstream.

In a possible implementation, the fourth training bitstream further includes a speed changing identifier corresponding to the second rate.

In a possible implementation, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

According to the second aspect, the first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

In a possible implementation, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set.

In a possible implementation, the method further includes: sending a fifth training bitstream to the first end, where the fifth training bitstream includes a third rate, and the third rate is a rate determined based on the target rate range; and receiving, at the third rate over the first data link, the data sent by the first end.

In a possible implementation, the method further includes: receiving a third response sent by the first end, where the third response includes response information corresponding to the fifth training bitstream.

In a possible implementation, data transmission is alternatively performed between the second end and the first end over a second data link, and the second data link is a serial data link or a parallel data link corresponding to the first data link. The second end corresponds to a fourth rate range, and the fourth rate range belongs to a transmission rate range supported when the second end sends data over the second data link. The method further includes: sending a sixth training bitstream to the first end, where the sixth training bitstream includes the fourth rate range; receiving a seventh training bitstream, where the seventh training bitstream includes a fourth rate, and the fourth rate belongs to the fourth rate range; and receiving, at the fourth rate over the second data link, the data sent by the second end.

In a possible implementation, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range.

According to a third aspect, an embodiment of this application provides a wired data transmission apparatus, used at a first end. Data transmission is performed between the first end and a second end over a first data link, the first data link is a serial data link or a parallel data link, and the apparatus includes:
a first receiving unit, configured to receive a first training bitstream sent by the second end, where the first training bitstream includes a second rate range, and the second rate range belongs to a transmission rate range supported when the second end receives data over the first data link;
a first sending unit, configured to send a second training bitstream to the second end, where the second training bitstream includes a first rate, and the first rate belongs to the second rate range; and
a second sending unit, configured to send the data to the second end at the first rate over the first data link.

According to the third aspect, the first end corresponds to a first rate range, and the first rate range is a transmission rate range supported when the first end sends the data over the first data link. The first rate is a rate determined based on a target rate range, and the target rate range is an intersection set of the first rate range and the second rate range.

In a possible implementation, the second rate range includes multiple enumerated transmission rates.

In a possible implementation, the second rate range is a transmission rate range supported when the second end receives the data over the first data link; or when the first end is connected to the second end via a repeater, the second rate range is a transmission rate range jointly supported by the second end and the repeater when the second end and the repeater transmit data over the first data link, and the repeater is configured to forward, to the second end, the data sent by the first end.

In a possible implementation, the first training bitstream further includes second declaration information, and the second declaration information includes information that the second end supports data transmission at any rate in the second rate range. The apparatus further includes: a first declaration unit, configured to send a third training bitstream to the second end. The third training bitstream includes first declaration information, and the first declaration information includes information that the first end supports data transmission at any rate in the first rate range.

In a possible implementation, the first rate is a highest rate in the target rate range.

In a possible implementation, the apparatus further includes: a fourth receiving unit, configured to: before sending the data to the second end at the first rate over the first data link, receive a first response sent by the second end, where the first response includes response information corresponding to the second training bitstream.

In a possible implementation, the second training bitstream further includes a speed changing identifier corresponding to the first rate, and the speed changing identifier indicates to adjust the transmission rate of the first data link.

According to the third aspect, the apparatus further includes: a first obtaining unit, configured to obtain a corresponding first bit error rate when the data is sent to the second end at the first rate over the first data link; and a fourth sending unit, configured to: when the first bit error rate is in a preset range, send the data to the second end at the first rate over the first data link.

According to the third aspect, the apparatus further includes: a fifth sending unit, configured to: when the first bit error rate exceeds the preset range, send the data to the second end at a second rate over the first data link, where the second rate is a rate in the target rate range and is less than the first rate.

According to the third aspect, the fifth sending unit is specifically configured to: determine the second rate based on the target rate range and the first rate, and send a fourth training bitstream to the second end, where the fourth training bitstream includes the second rate; and send the data to the second end at the second rate over the first data link.

In a possible implementation, the fourth receiving unit is further configured to: before sending the data to the second end at the second rate over the first data link, receive a second response sent by the second end, where the second response includes response information corresponding to the fourth training bitstream.

In a possible implementation, the fourth training bitstream further includes a speed changing identifier corresponding to the second rate.

In a possible implementation, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

According to the third aspect, the first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

In a possible implementation, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set.

In a possible implementation, the apparatus further includes: a fifth receiving unit, configured to: receive a fifth training bitstream sent by the second end, where the fifth training bitstream includes a third rate, and the third rate is a rate determined based on the target rate range; and send the data to the second end at the third rate over the first data link.

In a possible implementation, the apparatus further includes: a first response unit, configured to: before sending the data to the second end at the third rate over the first data link, send a third response to the second end, where the third response includes response information corresponding to the fifth training bitstream.

In a possible implementation, data transmission is alternatively performed between the first end and the second end over a second data link, and the second data link is a serial data link or a parallel data link corresponding to the first data link. The apparatus further includes: a sixth receiving unit, configured to receive a sixth training bitstream sent by the second end, where the sixth training bitstream includes a fourth rate range, and the fourth rate range belongs to a transmission rate range supported when the second end sends data over the second data link; a sixth sending unit, configured to send a seventh training bitstream to the second end, where the seventh training bitstream includes a fourth rate; and a seventh sending unit, configured to receive, at the fourth rate over the second data link, the data sent by the second end.

In a possible implementation, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range.

According to a fourth aspect, an embodiment of this application provides another wired data transmission apparatus. The wired data transmission apparatus is used at a second end, data transmission is performed between the second end and a first end over a first data link, the first data link is a serial data link or a parallel data link, the second end corresponds to a second rate range, and the second rate range belongs to a transmission rate range supported when the second end receives data over the first data link. The apparatus includes:
a third sending unit, configured to send a first training bitstream to the first end, where the first training bitstream includes the second rate range;
a second receiving unit, configured to receive a second training bitstream, where the second training bitstream includes a first rate, and the first rate belongs to the second rate range; and
a third receiving unit, configured to receive, at the first rate over the first data link, the data sent by the first end.

In a possible implementation, the second rate range includes multiple enumerated transmission rates.

According to the fourth aspect, the first end corresponds to a first rate range, and the first rate range is a transmission rate range supported when the first end sends the data over the first data link. The first rate is a rate determined based on a target rate range, and the target rate range is an intersection set of the first rate range and the second rate range.

In a possible implementation, the second rate range is a transmission rate range supported when the second end receives the data over the first data link; or when the first end is connected to the second end via a repeater, the second rate range is a transmission rate range of transmission of data forwarded by the repeater to the first end over the first data link, the second rate range is a transmission rate range jointly supported by the second end and the repeater, and the repeater is configured to forward, to the first end, the data sent by the second end.

In a possible implementation, the first training bitstream further includes second declaration information, and the second declaration information includes information that the second end supports data transmission at any rate in the second rate range. The apparatus further includes: a second declaration unit, configured to receive a third training bitstream sent by the first end. The third training bitstream includes first declaration information, and the first declaration information includes information that the first end supports data transmission at any rate in the first rate range.

In a possible implementation, the first rate is a highest rate in the target rate range.

In a possible implementation, the apparatus further includes: an eighth sending unit, configured to: before receiving, at the first rate over the first data link, the data sent by the first end, send a first response to the first end, where the first response includes response information corresponding to the second training bitstream.

In a possible implementation, a speed changing identifier indicates to adjust the transmission rate of the first data link.

According to the fourth aspect, the apparatus further includes: a seventh receiving unit, configured to: when a first bit error rate exceeds a preset range, receive, at a second rate over the first data link, the data sent by the first end, where the first bit error rate is a corresponding first bit error rate when the data is sent to the second end at the first rate over the first data link, and the second rate is a rate in the target rate range and is less than the first rate.

According to the fourth aspect, the seventh receiving unit is specifically configured to: receive a fourth training bitstream, where the fourth training bitstream includes the second rate; and receive, at the second rate over the first data link, the data sent by the first end.

In a possible implementation, the eighth sending unit is further configured to send a second response to the first end, where the second response includes response information corresponding to the fourth training bitstream.

In a possible implementation, the fourth training bitstream further includes a speed changing identifier corresponding to the second rate.

In a possible implementation, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

According to the fourth aspect, the first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

In a possible implementation, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set.

In a possible implementation, the apparatus further includes: a ninth sending unit, configured to: send a fifth training bitstream to the first end, where the fifth training bitstream includes a third rate, and the third rate is a rate determined based on the target rate range; and receive, at the third rate over the first data link, the data sent by the first end.

In a possible implementation, the apparatus further includes: a second response unit, configured to receive a third response sent by the first end, where the third response includes response information corresponding to the fifth training bitstream.

In a possible implementation, data transmission is alternatively performed between the second end and the first end over a second data link, and the second data link is a serial data link or a parallel data link corresponding to the first data link. The second end corresponds to a fourth rate range, and the fourth rate range belongs to a transmission rate range supported when the second end sends data over the second data link. The apparatus further includes: a tenth sending unit, configured to send a sixth training bitstream to the first end, where the sixth training bitstream includes the fourth rate range; an eighth receiving unit, configured to receive a seventh training bitstream, where the seventh training bitstream includes a fourth rate, and the fourth rate belongs to the fourth rate range; and a ninth receiving unit, configured to receive, at the fourth rate over the second data link, the data sent by the second end.

In a possible implementation, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range.

According to a fifth aspect, an embodiment of this application provides a communication system, including a first end, a second end, and a first data link. Data transmission is performed between the first end and the second end over the first data link, when the first end sends data, the wired data transmission method in the first aspect is implemented, and when the second end receives the data, the wired data transmission method in the second aspect is implemented.

According to a sixth aspect, an embodiment of this application provides a computer-readable storage medium, configured to store computer software instructions used by the wired data transmission apparatus provided in the third aspect or the fourth aspect. The computer-readable storage medium includes a program designed for executing the foregoing aspects.

According to a seventh aspect, an embodiment of this application provides a computer program product. The computer program product includes instructions. When the computer program is executed by a computer, the computer is enabled to perform procedures of the wired data transmission method in the first aspect or the second aspect.

### BRIEF DESCRIPTION OF DRAWINGS

To describe technical solutions in embodiments of this application or in the conventional technology more clearly, the following describes the accompanying drawings for describing embodiments of this application or the prior art.
FIG. 1 shows a communication system architecture for serial communication according to an embodiment of this application;
FIG. 2 shows another communication system architecture for serial communication according to an embodiment of this application;
FIG. 3 is a diagram of structures of a first end and a second end according to an embodiment of this application;
FIG. 4 is a diagram of a specific structure of a physical layer according to an embodiment of this application;
FIG. 5A is a schematic flowchart of a wired data transmission method according to an embodiment of this application;
FIG. 5B is a diagram of jumping of a status of a state machine shown in FIG. 4 according to an embodiment of this application;
FIG. 6 is a schematic flowchart for step S104 according to an embodiment of this application;
FIG. 7 is a diagram of a structure of a wired data transmission apparatus according to an embodiment of this application; and
FIG. 8 is a diagram of a structure of another wired data transmission apparatus according to an embodiment of this application.

### DESCRIPTION OF EMBODIMENTS

The making and use of embodiments are discussed in detail below. It should be appreciated, however, that multiple applicable inventive concepts provided in this application may be implemented in multiple specific environments. The specific embodiments discussed are merely illustrative of specific ways to implement and use this specification and this technology.

Unless otherwise defined, all technical terms used herein have the same meaning as those commonly known to a person of ordinary skill in the art.

Circuits or other components may be described as or referred to as "configured to" perform one or more tasks. In this case, "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes technical solutions in embodiments of this application with reference to the accompanying drawings in embodiments of this application. In this application, "at least one" refers to one or more, "multiple" refers to two or more, and "and/or" describes an association relationship between associated objects, and indicates that three relationships may exist. In addition, "and/or" describes an association between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

An "embodiment" mentioned in this specification means that a particular characteristic, structure, or feature described with reference to embodiments may be included in at least one embodiment of this application.

It should be noted that, in this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

First, for ease of understanding of embodiments of this application, the following describes technical problems that need to be resolved and application scenarios in embodiments of this application.

In the conventional technology, with development of communication technologies, a transmission rate at a physical layer of a current transmission interface may be changed among several fixed frequencies. For example, in the peripheral component interconnect express (peripheral component interface express, PCIe) 6.0, a link may be set up, for data transmission, at any rate of 2.5 GT/s, 5 GT/s, 8 GT/s, 16 GT/s, 32 GT/s, or 64 GT/s depending on different capabilities supported by interconnected devices. However, currently, a transmission rate of a data link can only be changed among the several fixed rates, and cannot be randomly adjusted. In addition, when a loss of the data link changes, the transmission rate cannot be dynamically adjusted based on the loss.

Therefore, an embodiment of this application provides a wired data transmission method, to randomly determine the transmission rate in a specific range, and dynamically adjust the transmission rate based on the loss of the data link during transmission. This further improves communication resource utilization. Therefore, in embodiments of this application, a first end and a second end are two devices or modules that can support changing of any rate through negotiation. In other words, the first end and the second end may declare, to each other, that transmission rates of the first end and the second end may be changed in a specific range when the first end and the second end support transmission in the data link. The first end and the second end may further declare, to each other, transmission rate ranges supported when the first end and the second end transmit data over the data link. The first end and the second end are two devices or modules that exchange data through an interface, for example, a serial interface or a parallel interface. For example, when the first end and the second end are in a same communication device, the first end may be a SoC chip system, and the second end may be an Ethernet network interface card. When the first end and the second end are in different communication devices, the first end may be a host, and the second end may be a solid-state disk, or the like. After a target transmission rate range jointly supported by the first end and the second end during data transmission in the data link is determined, any rate in the target transmission rate range may be determined as a transmission rate between the first end and the second end, such that the transmission rate between the first end and the second end can be changed not merely among several fixed rates.

In addition, it should be noted that data transmission is performed between the first end and the second end through the serial interface or the parallel interface. Various serial interfaces or parallel interfaces mentioned in embodiments of this application and the following related embodiments may include one or more of the following interfaces. For example, the serial interfaces include a universal serial bus (universal serial bus, USB) interface, a high-definition multimedia interface (high-definition multimedia interface, HDMI), a small computer system interface (small computer system interface, SCSI), a high-speed serial interface (high-speed serial interface, HSSI), and a serial attached SCSI interface. The parallel interfaces include a centronics interface and the like. In addition, the interfaces may further include an interface that complies with a peripheral component interconnect express (peripheral component interconnect express, PCIe) standard, an interface that complies with the Joint Electron Device Engineering Council (Joint Electron Device Engineering Council, JEDEC) 79-5 double data rate (Double Data Rate, DDR) 5 standard, and the like.

It should further be noted that for a specific implementation of the wired data transmission method provided in embodiments of this application, correspondingly refer to the following embodiments. Details are not described in embodiments of this application.

Based on the foregoing technical problems and the corresponding application scenarios, the following first describes, by using an example in which the first end exchanges data with the second end through a serial interface, a system architecture on which embodiments of this application are based, for ease of understanding of embodiments of this application.

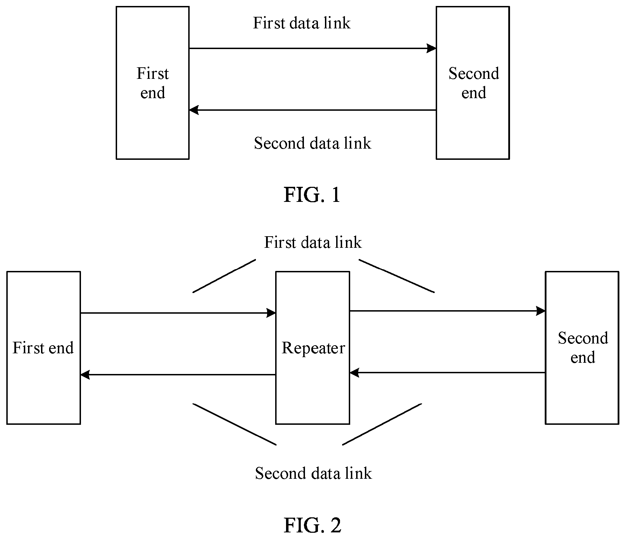

Embodiments of this application provide several communication system architectures for serial communication. Refer to FIG. 1 and FIG. 2. FIG. 1 is a communication system architecture for serial communication according to an embodiment of this application. As shown in FIG. 1, the communication system architecture includes a first end and a second end, and the first end exchanges data with the second end over a first data link and a second data link. The first end may be a device or a module including a serial interface, and the second end may be a device or a module that includes a serial interface corresponding to the first end and that exchange data with the first end through the serial interface. For example, the first end is a host (host) including a USB interface, and the second end may be a mobile storage device (for example, a USB flash drive) including a USB interface corresponding to the first end. In other words, at least one of the first end and the second end may actively send data. In addition, the first end and the second end support a capability of negotiating to any rate.

In addition, the serial interface (not shown in the figure) at the first end and the serial interface (not shown in the figure) at the second end each include two interfaces: a transmit interface and a receive interface. The transmit interface is configured to send data to a peer end, and the receive interface is configured to receive the data sent by the peer end. In embodiments of this application, the transmit interface at the first end is connected to the receive interface at the second end to form the first data link, and the receive interface at the first end is connected to the transmit interface at the second end to form the second data link. In the first data link, the first end sends data to the second end in a serial communication manner, that is, the first end sends the data and the second end receives the data. In the second data link, the second end sends data to the first end in a serial communication manner, that is, the second end sends the data and the first end receives the data. In addition, the data transmitted over the first data link may be the same as or different from the data transmitted over the second link, and a data transmission rate of the first data link may be the same as or different from a data transmission rate of the second link.

Optionally, the first data link and the second data link may be serial data links or parallel data links based on different types of communication interfaces. In the conventional technology, rates of both a serial data link applicable to the serial communication manner and a parallel data link applicable to a parallel communication manner are changed among only several fixed rates. Therefore, the first data link and the second data link in embodiments of this application may be serial data links or parallel data links. Due to different features of communication manners, each serial data link usually includes one link, and each parallel data link usually includes multiple links. Therefore, when the first data link is a serial data link, the first rate is only a transmission rate corresponding to one link. When the first data link is a parallel data link, the first rate is a transmission rate corresponding to multiple links, that is, transmission rates of all the multiple links are the same.

FIG. 2 is another communication system architecture for serial communication according to an embodiment of this application. As shown in FIG. 2, the communication system architecture includes a first end, a second end, and a repeater, and the first end is connected to the second end via the repeater.

The repeater is configured to relay and/or amplify a transmission signal between the first end and the second end, and the transmission signal is for data transmission. In other words, in embodiments of this application, the repeater is configured to forward, in the first data link, data sent by the first end to the second end, and forward, in the second data link, data sent by the second end to the first end. The repeater may include a clock data recovery (clock data recovery, CDR) component, a retimer (retimer), or the like. At a current transmission rate of a link, when a loss (for example, an insertion loss or a transmission loss) of the link slightly exceeds a drive capability range of the first end or the second end, a bit error rate of transmission may be high in the communication architecture shown in FIG. 1. However, in the communication architecture shown in FIG. 2, a bit error rate of transmission at the current transmission rate may be reduced when data is forwarded by using the repeater.

In some possible implementations, the first end may exchange data with the second end through the parallel interface in the parallel transmission manner. In this case, the first end may be a device or a module including a parallel interface, and the second end may be a device or a module that includes a parallel interface corresponding to the first end and that exchanges data with the first end through the parallel interface. The first data link and the second data link each include multiple links for parallel data transmission. Transmission rates of the multiple links for parallel data transmission are the same, but transmitted data is different.

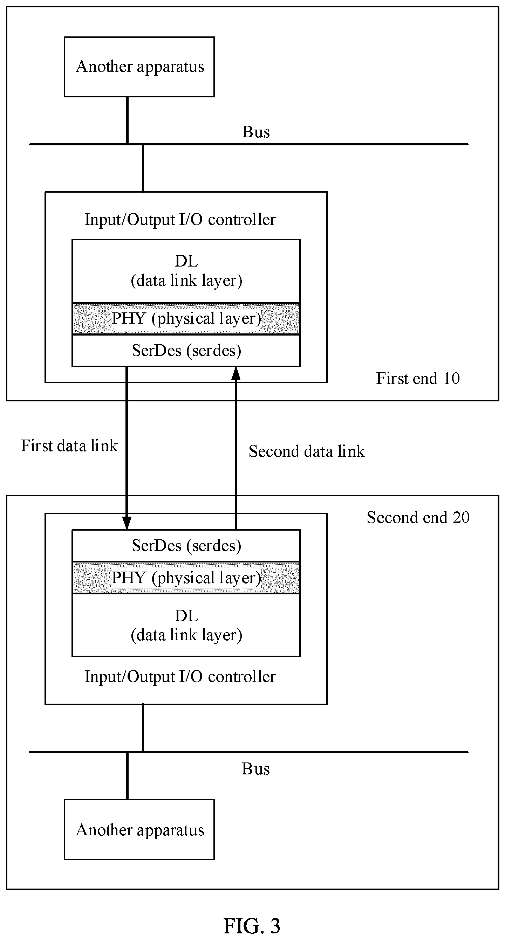

Based on the communication system architecture for serial communication provided in FIG. 1, an embodiment of this application provides a first end and a second end used in the communication system architecture shown in FIG. 1. FIG. 3 is a diagram of structures of a first end and a second end according to an embodiment of this application. The first end 10 is equivalent to the first end shown in FIG. 1, and the second end 20 is equivalent to the second end shown in FIG. 1. The first end 10 and the second end 20 each include a corresponding input/output I/O controller, a bus, and another apparatus. Data transmission may be performed inside the first end 10 and the second end 20 through buses. Data transmission may be performed between the first end 10 and the second end 20 via the input/output I/O controllers. The input/output I/O controllers at the first end 10 and the second end 20 correspond to the serial interfaces of the communication system architecture.

The input/output I/O controller at the first end 10 is used as an example. The input/output I/O controller may include a data link layer, a physical layer, and a serializer. In addition, there are a transport layer and an application layer (not shown in the figure) at the data link layer.

The data link layer may be used to define data transmitted in each link. For example, data is combined into a data block (the data block is referred to as a frame at the data link layer, and the frame is a transmission unit at the data link layer), and the data frame is sent to a peer end (for example, the second end) over a data transmission link (for example, a first data link); or the data frame sent by a peer end is received over a data transmission link (for example, a second data link).

The physical layer is configured to provide, to the first end 10, a link for receiving data and sending data. The link may be a data transmission link in one physical medium, or a data transmission link formed by connecting multiple physical media. The link is equivalent to the first data link and the second data link in embodiments of this application. The link mainly includes three statuses: a link setup state (which may also be referred to as an activated connection, a link training state, or the like of a control link), a data transmission state (which may also be referred to as a link setup success state, a link setup completion state, or the like), and a link down state. In a complete data transmission process, the physical layer is configured to train a link during link setup to transmit data. For example, in embodiments of this application, when determining a transmission rate based on a specific rate range, the first end trains the link, so that data is transmitted at a transmission rate of the link after link setup succeeds. The physical layer is configured to control a link in a link setup success state to transmit data (in this case, the link in a link setup success state is a link that is successfully trained). After data transmission in the link is completed, the physical layer is further configured to control a connection of link down.

The serializer may send or receive data in a serial communication manner. The serializer includes a serial circuit and a deserialization circuit. The serial circuit corresponds to a transmit interface, and is configured to send data to the peer end over the first data link, for example, converting data to be sent by the first end into a serial bitstream and send the serial bitstream to the second end over the first data link. The deserialization circuit corresponds to a receive interface, and is configured to receive data from the peer end over the second data link, for example, receiving, over the second data link, serial data sent by the second end, and return the serial data to the data link layer at the first end.

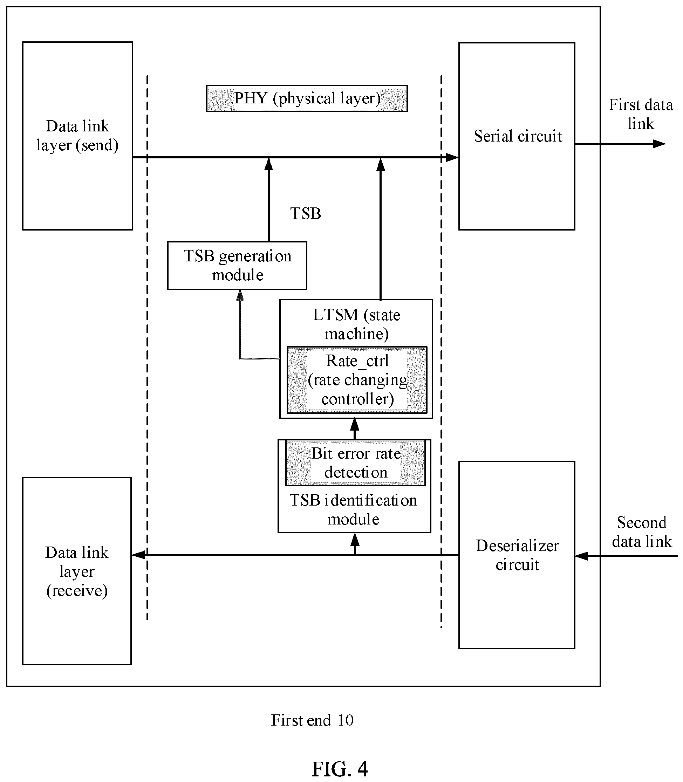

In addition, FIG. 4 is a diagram of a specific structure of a physical layer according to an embodiment of this application. The physical layer may include a TSB generation module, a state machine, and a TSB identification module.

The TSB generation module, namely, a training set block (training set block, TSB) generation module, is configured to generate a TSB bitstream. The TSB bitstream is a bitstream block that is generated by the physical layer during link setup and that may be sent to the peer end. The TSB bitstream carries link status information during link setup, some link training information required during link setup, and check information of the TSB bitstream. For example, the link training information may include a link identifier of a corresponding link, a current state of the physical layer, a transmission rate and step information supported by a local end (namely, the first end), and other related information required for constructing the link. For another example, in embodiments of this application, information exchanged between the first end and the second end is transmitted in a form of the bitstream. It should be noted that related training bitstreams such as a second training bitstream, a fourth training bitstream, a fifth training bitstream, and a seventh training bitstream mentioned in this application and the following embodiments may be understood as different TSB bitstreams output by the training set block generation module. For a specific implementation and a related structure of the TSB bitstream, further refer to the following embodiments. Details are not described herein in embodiments of this application.

The state machine, which is also referred to as a link training state machine (link training state machine, LTSM), is configured to perform global control on the link status and dynamically change a transmission rate of a link. The state machine includes a rate changing controller, and the rate changing controller is configured to dynamically change the transmission rate of the link. For example, the rate changing controller may decide a transmission rate value of the link during data transmission, and may send rate information to the TSB generation module, so that the rate information may be carried in a TSB bitstream and sent to the peer end. The rate changing controller may further control the serializer at the local end to change the transmission rate to a rate corresponding to the rate information to transmit data. The rate changing controller may further receive the rate information sent by the peer end, and control the serializer at the local end to change the transmission rate to the rate corresponding to the rate information sent by the peer end.

The TSB identification module is configured to calculate a bit error rate of the TSB bitstream based on the received TSB bitstream, and feed back the bit error rate to the rate changing controller to decide a rate.

It should be noted that, when a link loss is high, the bit error rate of the TSB bitstream is high, and a transmission rate of a current link may be accordingly decreased to reduce the loss. In addition, when the transmission rate corresponding to the link cannot be decreased or is hard to be decreased, and the loss of the current link is high but does not exceed a preset value, a repeater in the link may be used to amplify a transmission signal, to reduce the bit error rate of the TSB bitstream.

It should be noted that the structures of the first end and the second end in this application are also applicable to the communication system structure shown in FIG. 2. The architecture of the physical layer mentioned in the diagram in embodiments of this application is also applicable to the first end and the second end.

It should further be noted that specific structures of the first end and the second end are not specifically limited in embodiments of this application. For example, this application merely provides diagrams of structures of the first end and the second end in the communication system architecture for serial communication. However, similarly, it may be understood that in a communication system architecture for parallel communication, input/output I/O controllers at the first end and the second end each may also include a deserializer, a physical layer, and a data link layer. The deserializer may send or receive data in a parallel communication manner. For the physical layer and the data link layer, correspondingly refer to related descriptions in the foregoing embodiments. Details are not described herein again in embodiments of this application.

In addition, for ease of understanding of the following embodiments of this application, TSB bitstreams mentioned in the foregoing embodiments and the following embodiments are described in embodiments of this application as an example. It should be noted that training bitstreams (for example, a first training bitstream, the second training bitstream, a third training bitstream, the fourth training bitstream, the fifth training bitstream, a sixth training bitstream, and the seventh training bitstream) mentioned in this application and the following embodiments may include TSB bitstreams.

For example, in a link training process, for a data structure of a TSB bitstream sent by the first end to the second end, refer to Table 1. Table 1 shows the data structure of the TSB bitstream according to an embodiment of this application.

**Table 1**

| | | | | | | |
|---|---|---|---|---|---|---|
| TSB type | TSB payload 0 | TSB payload 1 | ... | TSB payload N | TSB CRC | TSB CRC |

As shown in Table 1, the TSB bitstream may carry link status information TSB type (field segment). The TSB bitstream may carry link training information: TSB payload (data type) 0, ..., TSB payload N, and the like, where the TSB payload 0 to TSB payload N are N different data types that separately indicate different link training information. The TSB bitstream may carry check information, namely, TSB cyclic redundancy check (cyclic redundancy check, CRC), of the TSB bitstream.

TSB type is used to identify a state of a data link during data transmission. For example, TSB type may indicate the state of the data link, for example, a discovery state (discovery state), a negotiated configuration state (negotiated configuration state), a retrain state (retrain state), an equalization state (equalization state), a speed changing state (speed changing state), and a link active state (link setup success state).

In the discovery state (discovery state), the local end may send declaration information to the peer end of the data link. For example, the local end may send a TSB bitstream to the peer end of the data link. The TSB bitstream carries information that the local end needs to declare to the peer end. The declaration information may include that the local end supports randomly adjusting of a transmission rate in a specific range, and may further include rate ranges supported by the local end during data receiving and data sending, a step set (including one or more steps with different sizes, where the step is a unit for adjusting the transmission rate), and the like.

In the negotiated configuration state (negotiated configuration state), a target rate range corresponding to each data link (for example, the first data link and the second data link in embodiments of this application) is comprehensively determined based on information declared by the two ends, and a target rate is negotiated with the peer end. In a negotiation process, negotiation information may be carried in the TSB bitstream. For example, in this state, the local end may send the TSB bitstream to the peer end of the data link. The TSB bitstream carries adjustment information for configuring the target rate of the data link or adjusting a current rate of the data link.

In the equalization state (equalization state), the serializer at the local end performs equalization adjustment on the data link to improve signal quality.

In the speed changing state (speed changing state), the serializer at the local end is controlled to change or adjust the current rate of the data link to a target rate negotiated in the negotiated configuration state.

In the retrain state (retrain state), the physical layer re-trains the data link.

In the link active state (link setup success state), the data link is successfully set up, and service data (for example, transmitted data) can be normally received and sent.

It should be noted that the discovery state (discovery state), the negotiated configuration state (negotiated configuration state), the equalization state (equalization state), and the speed changing state (speed changing state) belong to states of the data link in the link training process. Both the first end and the second end include the foregoing statuses.

TSB payload N: TSB payload N carries information corresponding to the state when the data link is in different states, and a length of TSB payload N can be any value. For example, when TSB type indicates discovery state (discovery state), TSB payload N may carry related information that needs to be declared by the local end, for example, rate adjustment ranges separately supported during data receiving and data sending, and adjustable step (step) sets during data receiving and data sending. For another example, when TSB type indicates speed changing state (speed changing state), TSB payload N may carry related information such as a speed changing identifier (indicating speed changing or adjustment) and the target rate.

TSB CRC: TSB CRC is used to check correctness of an entire TSB bitstream, to ensure that information carried in the TSB bitstream is correctly transmitted in the occurrence of bit errors. In addition, a pre-correction error rate (Bit Error ratio in, BERin) of a current SerDes can be calculated by checking correctness of the received bitstream.

For specific link status information, link training information, and check information of the TSB bitstream, refer to the following Table 2. Table 2 shows information that may be carried in a TSB bitstream provided in embodiments of this application.

**Table 2**

| Symbol number | Description (description) |
|---|---|
| 0 | **TSB type:** means TSB sent in which state (current state of a TSB bitstream) |
| | 0xA0: discovery |
| | 0xB0: configuration |
| | 0xC0: retrain |
| | 0xD0: equalization |
| | Other: reserved |
| 1 | **Data rate identifier and control:** bit map to each data rate and 1'b1 means support (each bit indicates a supported data rate) |
| | Bit 0: Data rate 0 supported (4.0 GT/s) |
| | Bit 1: Data rate 1 supported (4.0 GT/s to 8.0 GT/s) |
| | Bit 2: Data rate 2 supported (8.0 GT/s to 16.0 GT/s) |
| | Bit 3: Data rate 3 supported (16.0 GT/s to 32.0 GT/s) |
| | Bit 4: Data rate 4 supported (32.0 GT/s to 64.0 GT/s) |
| | Bit 5: Data rate 5 supported (64.0 GT/s to 128.0 GT/s) |
| | Bit 6: Reserved |
| | Bit 7: Change_speed (speed changing identifier: indicates to adjust a rate) |
| | Must assert this bit before change speed (change the rate in the supported range) |
| 2 | **Target link speed:** The TX target link speed can be same or different with RX target link speed (a transmission rate of a data transmit link may be the same as or different from a transmission rate of a data receive link) |
| | **Bit[3:0] TX target link speed** |
| | 4'b0000 data rate 0 |
| | 4'b0001 data rate 1 |
| | 4'b0010 data rate 2 |
| | 4'b0011 data rate 3 |
| | 4'b0100 data rate 4 |
| | 4'b0101 data rate 5 |
| | **Bit[7:4] RX target link speed** |
| | 4'b0000 data rate 0 |
| | 4'b0001 data rate 1 |
| | 4'b0010 data rate 2 |
| | 4'b0011 data rate 3 |
| | 4'b0100 data rate 4 |
| | 4'b0101 data rate 5 |
| 3 | **Flexible link speed control:** |
| | **Bit[2:0] data rate adjust step** (supported adjustable step) |
| | 3'b000 0M GT/s |
| | 3'b001 1000M GT/s |
| | 3'b010 100M GT/s |
| | 3'b011 10M GT/s |
| | **Bit 3 data rate adjust direction** (adjustment direction) |
| | 1'b0 Add |
| | 1'b1 SUB |
| | **Bit[7:4] data rate adjust step_num** (adjustment number) |
| | Target_link_speed=cur_link_speed(ADD or SUB) step*step_num |
| 4 | **TSB CRC[7:0]** (check information of the TSB bitstream) |
| 5 | **TSB CRC[15:8]** (check information of the TSB bitstream) |

As shown in Table 2, the TSB bitstream carries six data blocks. That the TSB bitstream carries related information mentioned in this application and the following embodiments may be understood as that the TSB bitstream includes the foregoing related information.

The 1^{st} data block carries TSB type information indicating a current state of the data link when the TSB bitstream is sent. There is only one current state for a bitstream. Therefore, information carried in the 1^{st} data block of the TSB bitstream can only be one of the following: 0xA0, 0xB0, 0xC0, 0xD0, and other.

The 2^{nd} data block carries data rate identifier and control (data rate identifier and control information). Data rate identifiers (bit 0 to bit 6) indicate data transmission rate ranges supported by the local end. For example, a first bit indicates that 4.0 GT/s is supported, and a second bit indicates that any rate within (4.0 to 8.0) GT/s is supported. The data rate control information (bit 7, equivalent to the speed changing identifier) indicates rate change. For another example, in embodiments of this application, in the discovery state, the TSB bitstream sent by the second end to the first end carries a second rate range. In other words, when the second end sends the second rate range to the first end, the sent TSB bitstream may carry the second rate range and 0xA0, to prove that the second end is in the discovery state, and declares, to the first end, that the transmission rate range, supported by the second end, in the data link is the second rate range.

The 3^{rd} data block carries target link speed (target link speed) indicating a transmission rate of the data link. The target link speed is classified into a transmission rate (corresponding to bit[3:0] in the 3^{rd} data block) corresponding to the data transmit link and a transmission rate (corresponding to bit[7:4] in the 3^{rd} data block) corresponding to the data receive link. One TSB bitstream may carry a transmission rate corresponding to one data transmit link or a transmission rate corresponding to one data receive link, or may carry both the transmission rate corresponding to the data transmit link and the transmission rate corresponding to the data receive link. Therefore, the transmission rate of the data transmit link and the transmission rate of the data receive link may be separately decided. The transmission rate corresponding to the data transmit link is used as an example: 4'b0001 is equivalent to that the transmission rate corresponding to the data transmit link is a supported transmission rate, namely, data rate 1 = (4.0 GT/s to 8.0 GT/s).

The 4^{th} data block carries flexible link speed control (rate adjustment information of the data link) including a supported adjustable step (step) size (corresponding to bit[2:0] in the 4^{th} data block), a supported adjustable direction (corresponding to bit2 in the 4^{th} data block), and a quantity of supported adjustable steps (corresponding to bit[7:4] in the 4^{th} data block). For example, 3'b001 1000M GT/s indicates that a single adjusted rate supported by the local end is 1000M GT/s when bit[2:0] in the 4^{th} data block is 3'b001. The direction of supported adjustment includes an addition direction and a subtraction direction. The quantity of adjustable steps is a quantity of adjusted steps decided by the state machine at the physical layer. For example, in embodiments of this application, in the negotiation state, the TSB bitstream sent by the first end to the second end carries a step of the current rate, an adjustment direction, and an adjustment amount.

The 5^{th} data block and the 6^{th} data block carry TSB CRC (check information of the TSB bitstream) used to check correctness of the entire TSB bitstream, for example, may be used to calculate bit error rates respectively corresponding to the data link when the data link transmits data at different rates.

It should be noted that Table 2 is merely an example manner provided in embodiments of this application. For example, the 3^{rd} data block of the TSB bitstream may carry flexible link speed control information, and the 4^{th} data block may carry target link speed information.

It should further be noted that, in the structure, the 2^{nd} data block to the 4^{th} data block all belong to TSB payload data in Table 1. For example, several pieces of TSB payload data may be added to the TSB bitstream shown in Table 2. For example, the 4^{th} data block carries the supported adjustable size of the step (step), the 5^{th} data block carries the supported adjustable direction, and the 6^{th} data block carries the quantity of supported adjustable steps.

The TSB bitstream may further carry link identifier information. The link identifier information is used to uniquely identify a data link, to indicate that the link training information carried in the TSB bitstream is used in the data link identified by the link identifier information. For another example, the TSB bitstream carries different information in different link statuses. In the discovery state, a corresponding bit in the TSB bitstream sent by the first end or the second end may be modified based on a size supported by the TSB bitstream, to modify a size of specific data carried in the TSB bitstream.

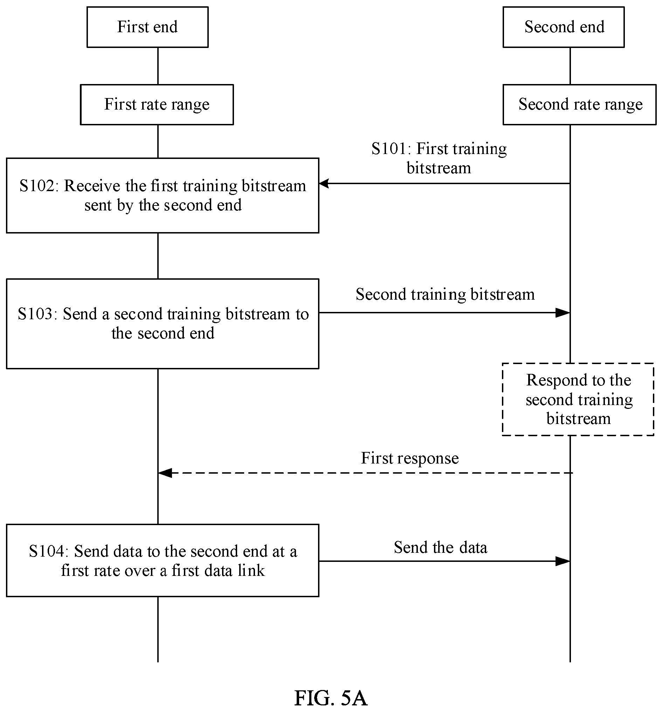

The technical problem in this application is analyzed and resolved in detail, based on the communication system architecture provided in FIG. 1, the diagram of structures of the first end and the second end provided in FIG. 3, and the diagram of the structure the physical layer provided in FIG. 4, and with reference to the wired data transmission method provided in this application. In embodiments of this application, an example in which data transmission is performed between a first end and a second end over a first data link is used. FIG. 5A is a schematic flowchart of a wired data transmission method according to an embodiment of this application. The method may be used in the diagram of the structures of the first end and the second end in FIG. 3 and the communication system architecture provided in FIG. 1. The first end may be configured to support and perform step S102 to step S104 in the method procedure shown in FIG. 5A, the second end may be configured to support and perform step S101 in the method procedure shown in FIG. 5A.

Step S101: A second end sends a first training bitstream to a first end.

Specifically, the second end sends the first training bitstream to the first end. The first training bitstream includes a second rate range, and the second rate range belongs to a transmission rate range supported when the second end receives data over a first data link. That the first end receives the first training bitstream sent by the second end may be understood as that the first end receives a TSB bitstream sent by the second end, where the TSB bitstream carries the second rate range. The second rate range may be considered as that the second end may receive data at a rate included in the second rate range. In other words, the second end has a capability of adjusting a transmission rate in the second rate range. For example, if the transmission rate range supported when the second end receives the data over the first data link is from 5 GT/s to 10 GT/s, it indicates that the second rate range may be from 5 GT/s to 10 GT/s, or from 5 GT/s to 9 GT/s, and the second rate range is less than or equal to the transmission rate range supported by the second end. Because the second end receives data or sends data over different data links, transmission rates at which the second end receives data or sends data may be the same or different. However, the transmission rate range supported when the second end receives the data is consistent with a transmission rate range supported when the second end sends the data. For example, the transmission rate range supported when the second end receives the data is from 5 GT/s to 10 GT/s, correspondingly, the transmission rate range supported when the second end sends the data is also from 5 GT/s to 10 GT/s.

Optionally, the second rate range includes multiple enumerated transmission rates. In this case, compared with several fixed rates in the conventional technology, the second rate range may include the multiple enumerated transmission rates. The multiple enumerated transmission rates may be multiple transmission rates, supported when the second end receives the data over the first data link, that is obtained by the second end according to an enumeration algorithm and based on influencing factors such as transmission quality of the data link, and communication capability supported by the second end. In other words, it may be considered that the second end may receive the data at any rate in the multiple enumerated transmission rates included in the second rate range. In addition, compared with several fixed rates in the conventional technology, the enumerated transmission rates are sufficient, so that all of the multiple enumerated transmission rates can form the second rate range. For example, in the conventional technology, three transmission rates supported by the second end in total are: 5 GT/s, 8 GT/s, and 16 GT/s. In an embodiment of this application, the transmission rate supported by the second end may be any one of 5.000 GT/s, 5.001 GT/s, 5.002 GT/s, 5.003 GT/s, ..., 15.998 GT/s, 15.999 GT/s, and 16.000 GT/s. Similarly, it may be learned that related transmission rate ranges such as a first rate range and a target rate range mentioned in this application and the following embodiments may be considered as transmission rate ranges including multiple enumerated values. Details are not described in embodiments of this application.

Optionally, the second rate range is a transmission rate range supported when the second end receives the data over the first data link; or when the first end is connected to the second end via a repeater, the second rate range is a transmission rate range jointly supported by the second end and the repeater when the second end and the repeater transmit data over the first data link, and the repeater is configured to forward, to the second end, the data sent by the first end. The second rate range may be a rate transmission range that is determined by the second end and that is supported by the second end in the first data link, or may be a rate transmission range that is jointly determined by the repeater and the second end and that is supported by the repeater and the second end in the first data link. In the communication system architecture shown in FIG. 2, the repeater in the first data link is configured to forward, to the second end, the data sent by the first end. The repeater may reduce some inter-symbol interference in the first data link, but may also adjust a rate at which the second end receives the data. Therefore, in a communication system architecture in which the repeater exists, the second rate range may be jointly determined by the repeater and the second end.

Optionally, the first training bitstream further includes second declaration information, and the second declaration information includes information that the second end supports data transmission at any rate in the second rate range. The method further includes: sending a third training bitstream to the second end. The third training bitstream includes first declaration information, and the first declaration information includes information that the first end supports data transmission at any rate in the first rate range. The first end and the second end may declare, to each other, that the first end and the second end have a capability of supporting any transmission rate in the data link. If the first end and the second end declare that the transmission rate can be supported, the transmission rate of the first data link can be negotiated to any rate in a rate range jointly supported by the first end and the second end. If either the first end or the second end cannot support transmission at any transmission rate in the data link, the transmission rate of the first data link cannot be negotiated to any rate in the rate range jointly supported by the first end and the second end.

It should be noted that the second end is used as an example, and the second declaration information and the second rate range that are supported by the second end may be simultaneously sent via one training bitstream (for example, the first training bitstream), or may be separately sent via different training bitstreams at different moments.

Step S102: The first end receives the first training bitstream sent by the second end.

Specifically, the first end receives the first training bitstream sent by the second end. The first end corresponds to the first rate range, and the first rate range is a transmission rate range supported when the first end sends the data over the first data link. The first rate range may be considered as that the first end may receive data at any rate in the first rate range, that is, the first end has a capability of adjusting a transmission rate in the first rate range. In addition, the first rate range is not only based on a transmission rate range supported by the first end, but also based on a transmission rate range supported by quality or bandwidth of the first data link. Similarly, the second rate range is not only based on a transmission rate range that is not rated by the second end or the second end and the repeater, but also based on the transmission rate range supported by the quality or the bandwidth of the first data link.

Optionally, the third training bitstream may further include the first rate range. In other words, the first end may send, to the second end, a TSB bitstream carrying the first rate range, so that the second end obtains a transmission rate range supported when the first end sends the data over the first data link, and the second end may determine the target rate range based on the first rate range and the second rate range.

It should be noted that the first end is used as an example, and the first declaration information and the first rate range that are supported by the first end may be simultaneously sent via one training bitstream (for example, the third training bitstream), or may be separately sent via different training bitstreams.

In other words, it may further be understood that the first declaration information, the second declaration information, the first rate range, and the second rate range may be respectively transmitted to a peer end in a form of a bitstream. The second end is used as an example. According to embodiments described in Table 1 and Table 2, the second end may modify, based on a rate range supported by the second end, a corresponding bit in the TSB bitstream sent by the second end, and then send the TSB bitstream to the first end.

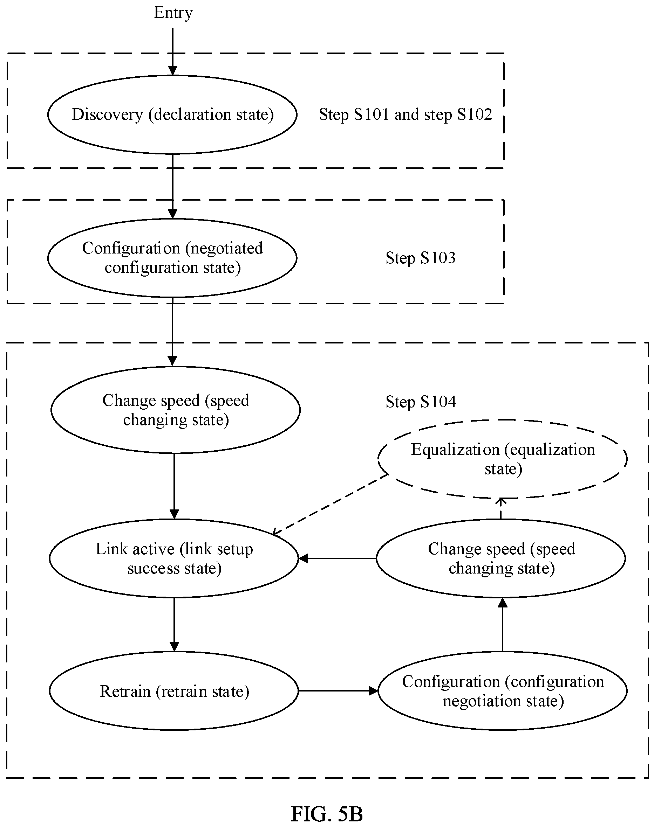

In addition, FIG. 5B is a diagram of jumping of a status of a state machine shown in FIG. 4 according to an embodiment of this application. As shown in FIG. 5B, both the first end and the second end in step S101 and step S102 are in a discovery state (discovery state) in a link training state. In this status, both the first end and the second end need to declare variable rates (namely, the first rate range and the second rate range in embodiments of this application) supported by physical layers, and start to set up a data link. In other words, in the discovery state, the first end and the second end may declare, to each other, rate transmission ranges supported by the first end and the second end, to determine a transmission rate corresponding to the data link.

In addition, it should be noted that, in the discovery state (discovery state), the first end and the second end further need to synchronously declare an adjustable step supported by the physical layer, that is, a rate at which a rate is increased or decreased during single rate adjustment.

Step S103: The first end sends a second training bitstream to the second end.

Specifically, the first end sends the second training bitstream to the second end. The second training bitstream includes a first rate, and the first rate belongs to the second rate range. The second training bitstream may be understood as a training bitstream used to request or notify the second end, to request or notify the second end that the first end transmits the data to the second end at the first rate. The first end decides the first rate in the second rate range according to a decision rule. The decision according to the rule may be performed based on communication quality, a loss, bandwidth, and the like of the first data link. For example, when the quality of the first data link is higher, the loss is lower, and the bandwidth is wider, the first rate is also larger. Alternatively, the decision may be performed based on a size of data to be transmitted and a transmission rate of a system bus of the first end. For example, in an extremely low-delay scenario, an operating frequency of a serializer at the first end (namely, a transmission rate of the first data mentioned in embodiments of this application) and a system bus frequency of a system on chip (system on chip, Soc) (namely, the transmission rate of the system bus mentioned in embodiments of this application) need to maintain a proportional relationship or even be synchronized.

In addition, the second training bitstream may be understood as a bitstream that is a request for negotiation or that is used to notify speed changing, and is a request or an indication used to negotiate with the second end to transmit the data at the first rate over the first data link. Optionally, the second training bitstream further includes a speed changing identifier corresponding to the first rate, and the speed changing identifier indicates to adjust the transmission rate of the first data link. It should be noted that when the first end decides the first rate, the first end sends first rate information to the TSB generation module, to generate bitstream information carrying the first rate. In the embodiment shown in Table 2, when the first end sends the second training bitstream to the second end, the second end may receive the bitstream information (for example, the TSB bitstream). In this case, the second end may determine, based on the bitstream information, the first rate and a first speed changing identifier, and control, based on the first identifier, a transmission rate, corresponding to the first data link, of the received data to be the first rate. In other words, the first rate decided by the first end may be sent to the second end via the second training bitstream. For example, after determining that the second end receives the second training bitstream, the first end may transmit the data to the second end at the first rate.

The first end corresponds to the first rate range, and the first rate range is a transmission rate range supported when the first end sends the data over the first data link. The first rate is a rate determined based on the target rate range, and the target rate range is an intersection set of the first rate range and the second rate range. The first end may determine the target rate range based on the first rate range and the second rate range, and then decide the first rate in the target rate range according to the decision rule. For example, a transmission rate range supported by the first end is from 5 GT/s to 16 GT/s, and a transmission rate range supported by the second end is from 5 GT/s to 9 GT/s. The transmission rate range jointly supported by the first end and the second end may be from 5 GT/s to 9 GT/s. The first rate is a rate in the target rate range, so that data transmission can be performed between the first end and the second end over the first data link at a rate jointly supported by the two ends, to reduce a waste of bandwidth of the first data link. In addition, it should be noted that the third training bitstream may further include the first rate range.

Optionally, the first rate is a highest rate in the target rate range. The first end determines, from the rate transmission range jointly supported by the two ends, that the highest rate is the transmission rate of the first data link, to fully utilize the bandwidth of the first data link, reduce a communication resource waste, and reduce data transmission time.

In addition, it should be noted that, as shown in FIG. 5B, both the first end and the second end in step S103 are in a negotiated configuration state (negotiated configuration state) in the link training state. In this state, the first end comprehensively determines an adjustable rate range of the data link based on information declared by the two ends, negotiates a target rate with the peer end, and adds information about the target rate via a TSB bitstream to configure the target rate of the data link.

Optionally, before the sending the data to the second end at the first rate over the first data link, the first end may receive a first response sent by the second end, where the first response includes response information corresponding to the second training bitstream. It may be understood that the second training bitstream may be a training bitstream for requesting the second end, and is used to request the second end that the first end transmits the data to the second end at the first rate. That the second end responds to the second training bitstream may be understood as follows: When the second end receives the second training bitstream sent by the first end, the physical layer at the second end configures the transmission rate corresponding to the first data link as the first rate, to prove that the second end agrees data transmission at the first rate by the first end, and sends the first response to the first end. In this case, as shown in FIG. 5B, when the second end is in a speed changing state (speed changing state) in the link training state, in this state, a serializer at the local end is controlled to change a current rate to a target rate negotiated in the negotiated configuration state. In addition, it should further be noted that when the second training bitstream is used to notify the second end that the first end transmits the data to the second end at the first rate, the second end may not need to send the first response to the first end. In other words, after the first end sends the second training bitstream to the second end, the first data link may enter a link setup success state from a link training state, and data transmission may be performed between the first end and the second end at the first rate over the first data link after the link is successfully setup. The response may alternatively be a response sent in a form of a training bitstream.

Step S104: Send the data to the second end at the first rate over the first data link.

Specifically, after the second end agrees to transmit the data at the rate, the first data link may enter a link setup success state from a link training state, and the first end sends the data to the second end at the first rate over the first data link.

It should be noted that, as shown in FIG. 5B, when the data is sent at the first rate in step S104, both the first end and the second end are in the link active state (link setup success state) in the link training state. The link setup success means that when the second end agrees with the second training bitstream and a first bit error rate is in a preset range, data transmission is performed between the first end and the second end at the first rate, that is, the first end and the second end jointly enter a phase of receiving and sending service data (for example, transmitted data).

Optionally, after the second end responds to the second training bitstream, and before the data is sent to the second end at the first rate over the first data link, an equalization operation may further be performed on the first data link, to complete equalization at the first rate, so as to improve communication quality. As shown in FIG. 5B, both the first end and the second end are in an equalization state (equalization state) in the link training state. In this state, equalization adjustment of a serializer at the local end is separately performed, to improve signal quality.

A corresponding first bit error rate is obtained when the data is sent to the second end at the first rate over the first data link; and when the first bit error rate is in a preset range, the data is sent to the second end at the first rate over the first data link.

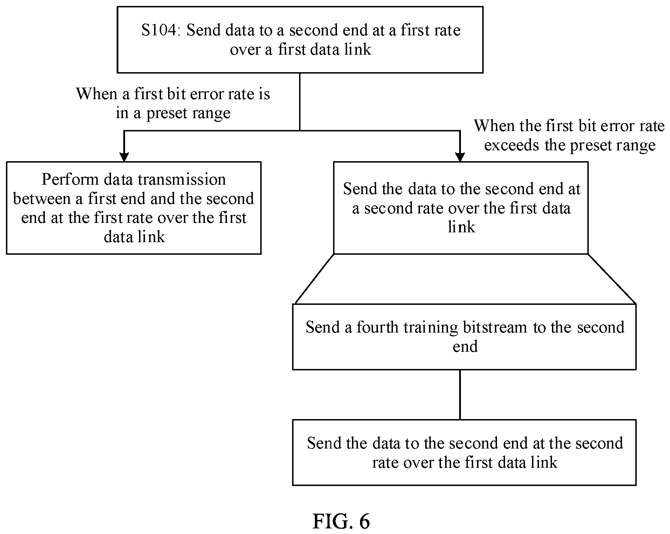

FIG. 6 is a schematic flowchart for step S104 according to an embodiment of this application. As shown in FIG. 6, before the data is sent to the second end at the first rate, the first end may first obtain the bit error rate of transmission at the first rate. A higher bit error rate indicates a larger loss of the first data link on which transmission is performed at the first rate. When the first bit error rate is in the preset range, data transmission is performed between the first end and the second end at the first rate over the first data link. Therefore, when the first bit error rate is in the preset range, data transmission may be performed between the first end and the second end at the first rate over the first data link.

When the first bit error rate exceeds the preset range, the data is sent to the second end at a second rate over the first data link, where the second rate is a rate in the target rate range and is less than the first rate. As shown in FIG. 6, when the first bit error rate exceeds the preset range, the data is sent to the second end at a second rate over the first data link, where the second rate is a rate in the target rate range and is less than the first rate. Therefore, when the first bit error rate exceeds the preset range, the transmission rate of the first data link is decreased to the second rate, to ensure quality of communication between the first end and the second end. In addition, the second rate is any rate in the target rate range and is less than the first rate, to fully utilize the bandwidth of the first data link, and save communication resources.

It should be noted that bit error rates of different rates correspond to different preset ranges. A higher rate indicates a larger preset range of a corresponding bit error rate, and a lower rate indicates a smaller preset range of a corresponding bit error rate. In other words, a higher rate indicates a higher error probability, and therefore a range corresponding to a bit error rate of the rate is also larger. For example, when a transmission rate is 32 GT/s, a preset range of a bit error rate of the transmission rate is 0-1⁻¹² BT. It means that when the transmission rate is 32 GT/s, each time 1¹² BT data is sent, an amount of incorrect data is less than 1 BT, that is, it may be considered that the bit error rate is in the preset range, and each time 1¹² BT data is sent, an amount of incorrect data is greater than 1 BT, that is, it may be considered that the bit error rate exceeds the preset range. When a transmission rate is 64 GT/s, a preset range of a bit error rate of the transmission rate is 0-1⁻⁸ BT. It means that when the transmission rate is 64 GT/s, each time 1⁸ BT data is sent, an amount of incorrect data is less than or equal to 1 BT, that is, it may be considered that the bit error rate is in the preset range, and each time 1⁸ BT data is sent, an amount of incorrect data is greater than 1 BT, that is, it may be considered that the bit error rate exceeds the preset range. Therefore, a higher rate corresponds to a higher preset range of the bit error rate. In addition, when transmission rates are the same, preset ranges of bit error rates corresponding to different modulation schemes are also different. For example, a preset range corresponding to a bit error rate obtained when a modulation method of 4-level pulse amplitude modulation (4-level pulse amplitude modulation, PAM4) is used is different from a preset range corresponding to a bit error rate obtained when a non-return-to-zero (non-return-to-zero, NRV) modulation method is used.

In addition, it should further be noted that, as shown in FIG. 5B, for step S104, when the first bit error rate exceeds the preset range, it proves that a loss of data transmission at the first rate is excessively large, and link setup fails. In this case, both the first end and the second end need to enter a retrain state (retrain state). In the retrain state, this is equivalent to retraining the data link. However, because the first end and the second end declare the rate range supported by the two ends, when the data link is retrained, the first end and the second end does not need to enter the discovery state again. In this case, the first end and the second end may directly enter the negotiation state to negotiate the transmission rate.

The sending the data to the second end at a second rate over the first data link includes: sending a fourth training bitstream to the second end, where the fourth training bitstream includes the second rate; and sending the data to the second end at the second rate over the first data link.

As shown in FIG. 6, the first end may send the fourth training bitstream to the second end. The fourth training bitstream includes the second rate, and may be used to request the second end to receive, at the second rate over the first data link, the data sent by the first end. The data is sent to the second end at the second rate over the first data link. A higher bit error rate indicates a larger loss of the first data link on which transmission is performed at the first rate. Therefore, when the first bit error rate exceeds the preset range, it proves that a loss of data transmission at the first rate by the first end is high. In this case, the transmission rate needs to be re-decided to reduce the loss, and the first end needs to negotiate with the second end again. Therefore, after deciding the second rate, the first end may send the fourth training bitstream to the second end. After the second end sends a second response, data transmission may be performed between the first end and the second end at the second rate over the first data link.

**In** addition, the fourth training bitstream may be understood as a bitstream that is a request for negotiation or that indicates speed changing. Optionally, the fourth training bitstream further includes a speed changing identifier corresponding to the second rate. The fourth training bitstream is used to request the second end to receive, at the second rate over the first data link, the data sent by the first end. Similarly, when the first end sends the fourth training bitstream to the second end, the second end may receive bitstream information (for example, a TSB bitstream). In this case, the second end may determine, based on the bitstream information, the second rate and the second speed changing identifier corresponding to the second rate, and control, based on the second speed changing identifier, a transmission rate, corresponding to the first data link, of the received data to be the second rate.

Optionally, before the sending the data to the second end at a second rate over the first data link, the method further includes: receiving the second response sent by the second end, where the second response is a response corresponding to the fourth training bitstream. The second response is similar to the first response. When the second end responds to the fourth training bitstream, the first end may receive the second response sent by the second end. The second response is the response corresponding to the fourth training bitstream, and it proves that the second end agrees with data transmission at the second rate by the first end. In addition, the response may alternatively be a response sent in a form of a training bitstream.

It should be noted that the second response indicates that the second end responds to the fourth training bitstream, and response information corresponding to the fourth training bitstream may indicate that the second end agrees with data transmission at the second rate by the first end. It may be understood that the second end feeds back, to the first end in a form of sending the TSB bitstream, that the fourth training bitstream sent by the first end is received. The second end feeds back, in the TSB bitstream sent to the first end, that the second end has received the fourth training bitstream, and reflects in the TSB bitstream that the second end agrees to adjust the first rate to obtain the second rate. The physical layer at the second end configures the transmission rate corresponding to the first data link as the second rate. In this case, as shown in FIG. 5B, when the second end is in the speed changing state (speed changing state) in the link training state again, in this state, a serializer at the local end is controlled to change the current rate to the target rate negotiated in the negotiated configuration state.

Optionally, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

The target rate range includes the multiple target rate subranges. In other words, it may be understood that the target rate range includes multiple rate ranges with different levels. For example, if the target rate range is from 2.5 GT/s to 64 GT/s, the target rate range may be divided into four target rate subranges: 2.5 GT/s to 8 GT/s, 8 GT/s to 16 GT/s, 16 GT/s to 32 GT/s, and 32 GT/s to 64 GT/s. The first rate may belong to a first level from 32 GT/s to 64 GT/s. When the bit error rate corresponding to the first rate exceeds a preset threshold, it indicates that a link loss corresponding to the first rate is large, and the first rate may be decreased to reduce the loss. Therefore, the second rate may be a rate that is less than the first rate and that is in the first level from 32 GT/s to 64 GT/s, or may be a rate in a second level from 16 GT/s to 32 GT/s. In addition, similar to the second rate range, the target rate range and the multiple target rate subranges each include multiple enumerated transmission rates.

Optionally, the first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer. The first training bitstream further includes the second step set, and the second step set, and the second declaration information and the second rate range that are supported by the second end may be simultaneously sent via one training bitstream (for example, the first training bitstream), or may be separately sent via different training bitstreams. In other words, when the second end sends the first training bitstream to the first end, the first training bitstream may carry one or more of the following: the second declaration information, the second rate range, and the second step set. Similarly, when the first end sends the third training bitstream to the second end, the third training bitstream may carry one or more of the following: the first declaration information, the first rate range, and the first step set. It may be understood that receiving of the first training bitstream by the first end from the second end may further include: The first end receives a TSB bitstream sent by the second end, where the TSB bitstream carries the second step set. According to embodiments described in Table 1 and Table 2, the second end may adjust, based on sizes of the multiple second steps supported by the second end, a value of bit[2:0] in the corresponding fourth data block, and then send the TSB bitstream to the first end.

In addition, the fourth training bitstream may include the adjustment information, so that when adjusting the rate based on the first rate, the second end may adjust the rate by using the step as a unit for adjusting the transmission rate. The second rate may be obtained by adding sizes of one or more target steps to or subtracting sizes of one or more target steps from the first rate. This rate adjustment manner allows the rate to change not merely among several fixed rates. Therefore, in this application, bandwidth of the data link can be fully utilized, and a communication resource waste can be reduced.

Optionally, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set. The first end may determine the target step based on the target step set. The target step set is a step set that is jointly supported by the first end and the second end for adjustment, so that the second end adjusts the transmission rate of the first data link to the second rate based on the target step. In addition, the third training bitstream may further include the first step set.

For the first end, the method may further include: determining the target step set based on the first step set and the second step set; determining the target step based on the target step set; and determining, based on the target rate range and the first bit error rate, the adjustment direction and the amount of adjustment performed on the target step. In other words, the adjustment direction of the current transmission rate and the amount of adjustment performed on the target step may be determined based on the bit error rate corresponding to the first rate and the rate range jointly supported by the first end and the second end.

The first step is a step supported by the first end when the transmission rate of the first data link is adjusted, the second step is a step supported by the second end when the transmission rate of the first data link is adjusted, and the step is a unit for adjusting the transmission rate. For example, the first step set that corresponds to the first data link and that is supported by the first end includes: 1000M GT/s, 100M GT/s, and 10M GT/s, where 1000M GT/s, 100M GT/s, and 10M GT/s are first steps with different values. The second step set that corresponds to the first data link and that is supported by the second end includes: 1000M GT/s and 100M GT/s, where 1000M GT/s and 100M GT/s are second steps with different values. In this case, the target step set jointly supported by the first end and the second end in the first data link includes: 1000M GT/s and 100M GT/s, where 1000M GT/s and 100M GT/s are steps with different values in the target step set. In other words, it means that, when the transmission rates of the first end and the second end in the first data link are adjusted, it may be determined that a single adjusted rate is 100M GT/s, that is, the target step is 100M GT/s. For example, if the current transmission rates of the first end and the second end in the first data link are 32 GT/s, the transmission rates may be adjusted in a unit of 100M GT/s during single adjustment. For example, the transmission rates of the first end and the second end in the first data link may be adjusted to 32G+100M GT/s or 32G+5*100M GT/s.

**In** addition, it should be noted that, as shown in FIG. 5B, when the first end and the second end exchange supported step sets in a form of a bitstream, both the first end and the second end are in the discovery state (discovery state) in the link training state, and the supported step sets are declared synchronously with the rate ranges declared in step S101 and step S102. In other words, before step S103, both the first end and the second end need to configure information about a minimum single adjusted rate at the physical layer. Therefore, in the discovery state, the first end and the second end may declare, to each other, both the rate transmission ranges and the step sets supported by the first end and the second end, to adjust the transmission rate corresponding to the data link.

It may further be understood that, the step is a size of a rate increase or decrease during single rate adjustment. The adjustment direction is a rate increase or decrease based on the current rate. The adjustment amount is a total amount, corresponding to the target step, of adjustment to be performed on the target step, is a positive integer, and may be understood as a quantity of steps. For example, rate change during single adjustment = (adjustment direction) * step * adjustment amount corresponding to the step.

In addition, when the rate is adjusted based on the first rate, a size of the step and the amount of adjustment performed on the step may be determined by using a step as a unit and based on a current link loss degree. In other words, the second rate may be obtained by adding M target steps to or subtracting M target steps from the first rate, and the target step is any step in the step set jointly supported by the first end and the second end. For example, second rate = first rate + (adjustment direction) * target step * adjustment amount. This manner of adjusting a current rate based on a step allows the rate to change not merely among several fixed rates. Therefore, in this application, bandwidth of the data link can be fully utilized, and a communication resource waste can be reduced.

It should further be noted that, as shown in FIG. 5B, when the first end and the second end renegotiate the transmission speed of the first data link, both the first end and the second end are in the speed changing state (speed changing state) in the link training state. In this state, the first end sends the fourth training bitstream to the second end, and the fourth training bitstream further includes adjustment information. In embodiments shown in Table 2, the adjustment information includes one or more of the following: the target step, the adjustment direction, and the adjustment amount. The adjustment information may indicate how the second end adjusts the first rate to obtain the second rate. Therefore, in a possible implementation, the fourth training bitstream may further include the first rate.

It should further be noted that before sending the data to the second end at the second rate over the first data link, the first end further needs to obtain a second bit error rate corresponding to the second rate. When the second bit error rate exceeds a preset range corresponding to the second bit error rate, the first end and the second end further need to renegotiate a transmission rate until the bit error rate falls in the preset range corresponding to the bit error rate. For a manner of negotiating the transmission rate, correspondingly refer to the foregoing related descriptions in which the first end and the second end negotiates the second rate. Details are not described again in embodiments of this application.

Optionally, a fifth training bitstream sent by the second end is received, where the fifth training bitstream includes a third rate, and the third rate is a rate determined based on the target rate range. The data is sent to the second end at the third rate over the first data link. When the second end needs to change the transmission rate, the second end may send the fifth training bitstream to the first end, to change the current rate to the third rate. In other words, in this embodiment of this application, in the data transmission process, a current transmission rate may still be randomly changed based on a transmission status and the like. The fifth training bitstream is used to request to send the data to the second end at the third rate over the first data link. Same as related descriptions of the second training bitstream and the fourth training bitstream, the fifth training bitstream may be understood as a training bitstream for requesting or notifying the first end, to request or notify the first end to transmit the data to the second end at the third rate. The fifth training bitstream further includes the third rate.

In addition, optionally, before the sending the data to the second end at the third rate over the first data link, the method further includes: sending a third response to the second end, where the third response includes response information corresponding to the fifth training bitstream. In embodiments of this application, when the first end responds to the fifth training bitstream, the first end may send the third response to the second end. The third response is a response corresponding to the fourth training bitstream, and it proves that the first end agrees to transmit the data at the third rate to the second end.

The first end receives the fifth training bitstream sent by the second end, where the fifth training bitstream includes the third rate, and the third rate is a rate determined based on the target rate range; sends the third response to the second end, where the third response includes response information corresponding to the fifth training bitstream; and sends the data to the second end at the third rate over the first data link. When the fifth training bitstream sent by the second end is received, the data is sent to the second end at the third rate over the first data link, in response to the fifth training bitstream. The fifth training bitstream includes the third rate, the third rate is the rate determined based on the target rate range, and the third rate is different from the current transmission rate of the first data link. In a data transmission process, when the second end needs to change the transmission rate, the second end may send the fifth training bitstream to the first end, so that the first end responds to the fifth training bitstream, to change the current rate to the third rate. In other words, in this embodiment of this application, in the data transmission process, a current transmission rate may still be randomly changed based on a transmission status and the like.

Optionally, data transmission is alternatively performed between the first end and the second end over a second data link, and the second data link is a serial data link or a parallel data link corresponding to the first data link. The method further includes: receiving a sixth training bitstream sent by the second end, where the sixth training bitstream includes a fourth rate range, and the fourth rate range belongs to a transmission rate range supported when the second end sends data over the second data link; sending a seventh training bitstream to the second end, where the seventh training bitstream includes a fourth rate; and receiving, at the fourth rate over the second data link, the data sent by the second end.

The second data link is a link that connects a transmit interface at the second end to a receive interface at the first end, and the data is transmitted from the second end to the first end. Therefore, the second data link is different from the first data link. In the second data link, the second end may be understood as a source end of data transmission, and the first end may be understood as a destination end of data transmission. The first end and the second end may perform data transmission at a highest rate actually supported by the current second data link, to reduce a waste of the bandwidth of the first data link. A transmission rate between the first end and the second end may be adaptively adjusted in a specific range based on changes of the loss of the link and the rate of the system bus, to improve communication quality, and reduce a resource waste.

In addition, communication between the first end and the second end may be bidirectionally symmetric, or may be asymmetric. In other words, for the first end, sizes of the sending rate and the receiving rate of the first end during data transmission may be the same or different, and the first end may be synchronized or may not be synchronized when negotiating the transmission rate with the second end. It may be understood that a size of the transmission rate of the first end in the second data link may be the same as or different from a size of the transmission rate of the first end in the first data link. In addition, the first end may synchronously negotiate the transmission rate in the second data link and the transmission rate in the first data link with the second end, or may separately negotiate the transmission rate in the second data link and the transmission rate in the first data link with the second end.

It should be noted that, during initial interaction (when link setup starts), an initial sending rate of the first end is the same as an initial receiving rate of the second end, and an initial receiving rate of the first end is the same as an initial sending rate of the second end. Different from the first rate at which data is transmitted in this application, the initial rate may be a rate at which the second end sends the first training bitstream to the first end, a rate at which the first end sends the third training bitstream to the second end, or the like. A size of the initial rate may be a rate preset by the first end and the second end.

Optionally, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range. The first end may determine, based on the third rate range and the fourth rate range, a rate range, namely, the first target rate range, jointly supported by the first end and the second end in the second data link. The fourth rate is a rate in the first target rate range, so that data transmission can be performed between the first end and the second end over the second data link at a rate jointly supported by the two ends, to reduce a waste of bandwidth of the second data link. It may be understood that, when the second end declares, to the first end, the transmission rate range supported when the data is received, the second end may also declare the transmission rate range supported when the data is sent. In other words, the fourth rate range and the second rate range may be synchronously sent to the first end. Therefore, when data is transmitted over the second data link, the second end may decide the fourth rate synchronously with the first rate. This is not limited in embodiments of this application.

It may further be understood that the first rate range and the third rate range that correspond to the first end may be the same or different, and the second rate range and the fourth rate range that correspond to the second end may be the same or different.

It should be noted that in embodiments of this application, an example in which data transmission is performed between the first end and the second end over the connected first data link is used for description. Alternatively, data transmission may be performed between the first end and the second end over the connected second data link, the second end transmits data, and the first end receives data. The first end may separately decide the transmission rate of the first data link and the transmission rate of the second data link. The transmission rate of the first data link may be the same as or different from the transmission rate of the second data link. In addition, for data transmission performed between the first end and the second end over the second data link, refer to the foregoing related descriptions of data transmission performed over the first data link. Details are not described again in embodiments of this application.

Optionally, the first data link is a serial data link or a parallel data link. Correspondingly, the second data link may also be a serial data link or a parallel data link.

In the conventional technology, rates of both a serial data link applicable to the serial communication manner and a parallel data link applicable to a parallel communication manner are changed among only several fixed rates. Therefore, the first data link in embodiments of this application may be a serial data link or a parallel data link. Due to different features of communication manners, the serial data link usually includes one link, and the parallel data link usually includes multiple links. Therefore, the first data link is used as an example. When the first data link is a serial data link, the first rate is only a transmission rate corresponding to one link. When the first data link is a parallel data link, the first rate is a transmission rate corresponding to multiple links, that is, transmission rates of all the multiple links are the same.

In addition, it should further be noted that the second end may alternatively determine the transmission rate of the first data link and the transmission rate of the second data link based on the first rate range sent by the first end and the second rate range of the local end. An execution body for determining the first rate is not specifically limited in embodiments of this application.

In the conventional technology, a transmission rate of a data link set up at a physical layer may be changed among only several fixed rates. For example, if a source end supports transmission rates of 5 GT/s, 8 GT/s, and 16 GT/s, and a destination end supports transmission rates of 5 GT/s and 8 GT/s, a transmission rate from the source end to the destination end can only be 5 GT/s or 8 GT/s. Therefore, when a current link can support a higher rate, a bandwidth waste is caused. For example, the current link can transmit data at a rate of 8.5 GT/s, but the data can be transmitted only at a maximum rate of 8 GT/s in a current manner, which causes a bandwidth waste. In addition, because the transmission rate can change among only the several fixed rates, the transmission rate of the data link cannot be adaptively adjusted based on changes of a loss of the link and a rate of a system bus, which causes a resource waste and poor communication quality. Therefore, the wired data transmission method provided in this embodiment of this application can support changing of the transmission rate of the data link in a specific range, to reduce a communication resource waste. In an extremely low-delay scenario, a transmission rate of a transmission interface may be consistent with a transmission rate of a system bus, to reduce a cross-clock-domain asynchronous processing delay. It is noted in advance that the first data link is a wired data transmission link that connects a transmit interface at the first end and a receive interface at the second end, the first data link may be a serial data link or a parallel data link, and data is transmitted from the first end to the second end. Therefore, in the first data link, the first end may be understood as a source end of data transmission, and the second end may be understood as a destination end of data transmission. The wired data transmission method provided in this embodiment of this application is applied at the first end (which may also be understood as the source end of data transmission), and data transmission is performed between the first end and the second end over the first data link. The second end corresponds to the second rate range, and the second rate range belongs to the transmission rate range supported when the second end receives the data over the first data link. The first end may receive, in a link training process, the first training bitstream sent by the second end. The first training bitstream includes the second rate range, that is, the second end declares, in a form of a bitstream, to the first end the transmission rate range supported by the second end in the first data link. The first end decides the first rate, and negotiates with or notifies the second end to transmit the data at the first rate over the first data link, that is, the first end sends the second training bitstream to the second end. The second training bitstream includes the first rate, and the first rate is any rate in the second rate range. The second training bitstream may be understood as a training bitstream used to request or notify the second end, to request or notify the second end that the first end transmits the data to the second end at the first rate. After the first end sends the first rate to the second end in a form of a bitstream, data transmission may be performed between the first end and the second end at the first rate. For example, after the second end agrees to transmit the data at the first rate, the first data link may enter a link setup success state from a link training state, and data transmission may be performed between the first end and the second end at the first rate over the first data link after the link is successfully set up. In addition, the first rate is a rate in the second rate range. For example, when the transmission rate supported by the second end is from 5 GT/s to 9 GT/s, the first rate may be 8.5 GT/s or 9 GT/s. Therefore, in comparison with the conventional technology in which data can be transmitted only at a fixed rate, in this embodiment of this application, data can be transmitted at a rate, in a rate range supported by the second end, actually supported by the first data link, to reduce a waste of bandwidth of the first data link. In addition, for example, in an extremely low-delay scenario, a transmission rate between the first end and the second end may be adaptively adjusted in the second rate range based on changes of the loss of the link, the rate of the system bus, and the like. Therefore, the transmission rate of the transmission interface is consistent with the transmission rate of the system bus, to reduce a cross-clock-domain asynchronous processing delay.

The foregoing describes the method in embodiments of this application in detail. The following provides a related apparatus in embodiments of this application.

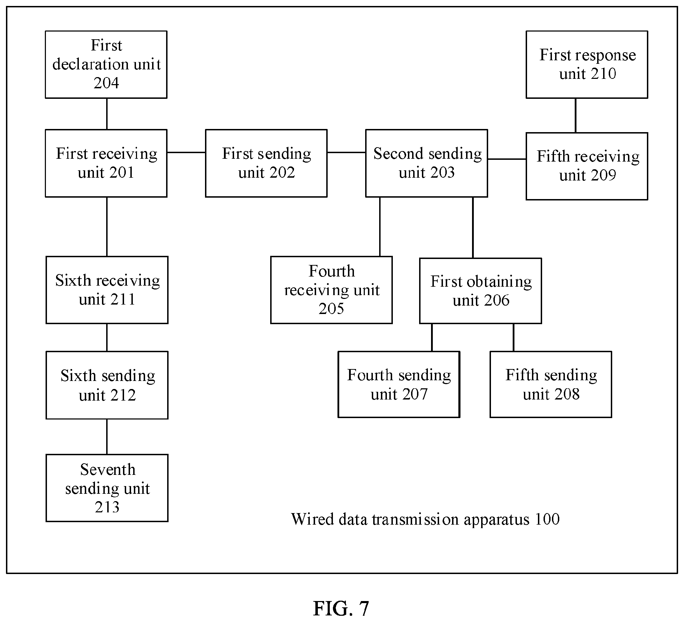

FIG. 7 is a diagram of a structure of a wired data transmission apparatus according to an embodiment of this application. The wired data transmission apparatus 100 shown in FIG. 7 is used at the first end shown in FIG. 1. Data transmission is performed between the first end and a second end over a first data link, and the first data link is a serial data link or a parallel data link. The wired data transmission apparatus 100 may include a first receiving unit 201, a first sending unit 202, and a second sending unit 203; and may further include: a first declaration unit 204, a fourth receiving unit 205, a first obtaining unit 206, a fourth sending unit 207, a fifth sending unit 208, a fifth receiving unit 209, a first response unit 210, a sixth receiving unit 211, a sixth sending unit 212, and a seventh sending unit 213. Detailed descriptions of the units are as follows:

The first receiving unit 201 is configured to receive a first training bitstream sent by the second end, where the first training bitstream includes a second rate range, and the second rate range belongs to a transmission rate range supported when the second end receives data over the first data link.

The first sending unit 202 is configured to send a second training bitstream to the second end, where the second training bitstream includes a first rate, and the first rate belongs to the second rate range.

The second sending unit 203 is configured to send the data to the second end at the first rate over the first data link.

The first end corresponds to a first rate range, and the first rate range is a transmission rate range supported when the first end sends the data over the first data link. The first rate is a rate determined based on a target rate range, and the target rate range is an intersection set of the first rate range and the second rate range.

In a possible implementation, the second rate range includes multiple enumerated transmission rates.

In a possible implementation, the second rate range is a transmission rate range supported when the second end receives the data over the first data link; or when the first end is connected to the second end via a repeater, the second rate range is a transmission rate range jointly supported by the second end and the repeater when the second end and the repeater transmit data over the first data link, and the repeater is configured to forward, to the second end, the data sent by the first end.

In a possible implementation, the first training bitstream further includes second declaration information, and the second declaration information includes information that the second end supports data transmission at any rate in the second rate range. The apparatus further includes: the first declaration unit 204, configured to send a third training bitstream to the second end. The third training bitstream includes first declaration information, and the first declaration information includes information that the first end supports data transmission at any rate in the first rate range.

In a possible implementation, the first rate is a highest rate in the target rate range.

In a possible implementation, the apparatus further includes: the fourth receiving unit 205, configured to: before sending the data to the second end at the first rate over the first data link, receive a first response sent by the second end, where the first response includes response information corresponding to the second training bitstream.

In a possible implementation, the second training bitstream further includes a speed changing identifier corresponding to the first rate, and the speed changing identifier indicates to adjust the transmission rate of the first data link.

The apparatus further includes: the first obtaining unit 206, configured to obtain a corresponding first bit error rate when the data is sent to the second end at the first rate over the first data link; and the fourth sending unit 207, configured to: when the first bit error rate is in a preset range, send the data to the second end at the first rate over the first data link.

The apparatus further includes: the fifth sending unit 208, configured to: when the first bit error rate exceeds the preset range, send the data to the second end at a second rate over the first data link, where the second rate is a rate in the target rate range and is less than the first rate.

The fifth sending unit 208 is specifically configured to: determine the second rate based on the target rate range and the first rate, and send a fourth training bitstream to the second end, where the fourth training bitstream includes the second rate; and send the data to the second end at the second rate over the first data link.

In a possible implementation, the fourth receiving unit 205 is further configured to: before sending the data to the second end at the second rate over the first data link, receive a second response sent by the second end, where the second response includes response information corresponding to the fourth training bitstream.

In a possible implementation, the fourth training bitstream further includes a speed changing identifier corresponding to the second rate.

In a possible implementation, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

The first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

In a possible implementation, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set.

In a possible implementation, the apparatus further includes: the fifth receiving unit 209, configured to: receive a fifth training bitstream sent by the second end, where the fifth training bitstream includes a third rate, and the third rate is a rate determined based on the target rate range; and send the data to the second end at the third rate over the first data link.

In a possible implementation, the apparatus further includes: the first response unit 210, configured to: before sending the data to the second end at the third rate over the first data link, send a third response to the second end, where the third response includes response information corresponding to the fifth training bitstream.

In a possible implementation, data transmission is alternatively performed between the first end and the second end over a second data link, and the second data link is a serial data link or a parallel data link corresponding to the first data link. The apparatus further includes: the sixth receiving unit 211, configured to receive a sixth training bitstream sent by the second end, where the sixth training bitstream includes a fourth rate range, and the fourth rate range belongs to a transmission rate range supported when the second end sends data over the second data link; the sixth sending unit 212, configured to send a seventh training bitstream to the second end, where the seventh training bitstream includes a fourth rate; and the seventh sending unit 213, configured to receive, at the fourth rate over the second data link, the data sent by the second end.

In a possible implementation, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range.

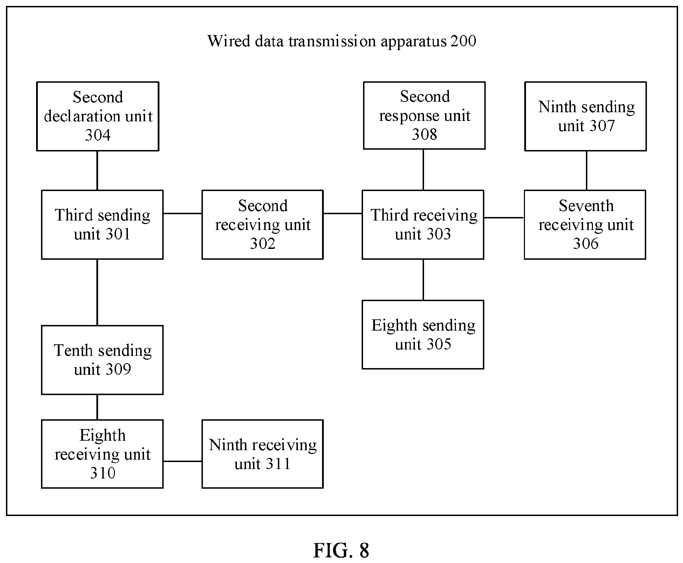

FIG. 8 is a diagram of a structure of another wired data transmission apparatus according to an embodiment of this application. The wired data transmission apparatus 200 shown in FIG. 8 is used at the second end shown in FIG. 1. Data transmission is performed between the second end and a first end over a first data link, the first data link is a serial data link or a parallel data link, the second end corresponds to a second rate range, and the second rate range belongs to a transmission rate range supported when the second end receives data over the first data link. The wired data transmission apparatus 200 may include a third sending unit 301, a second receiving unit 302, and a third receiving unit 303; and may further include: a second declaration unit 304, an eighth sending unit 305, a seventh receiving unit 306, a ninth sending unit 307, a second response unit 308, a tenth sending unit 309, an eighth receiving unit 310, and a ninth receiving unit 311. Detailed descriptions of the units are as follows:
The third sending unit 301 is configured to send a first training bitstream to the first end, where the first training bitstream includes the second rate range.

The second receiving unit 302 is configured to receive a second training bitstream, where the second training bitstream includes a first rate, and the first rate belongs to the second rate range.

The third receiving unit 303 is configured to receive, at the first rate over the first data link, the data sent by the first end.

In a possible implementation, the second rate range includes multiple enumerated transmission rates.

The first end corresponds to a first rate range, and the first rate range is a transmission rate range supported when the first end sends the data over the first data link. The first rate is a rate determined based on a target rate range, and the target rate range is an intersection set of the first rate range and the second rate range.

In a possible implementation, the second rate range is a transmission rate range supported when the second end receives the data over the first data link; or when the first end is connected to the second end via a repeater, the second rate range is a transmission rate range of transmission of data forwarded by the repeater to the first end over the first data link, the second rate range is a transmission rate range jointly supported by the second end and the repeater, and the repeater is configured to forward, to the first end, the data sent by the second end.

In a possible implementation, the first training bitstream further includes second declaration information, and the second declaration information includes information that the second end supports data transmission at any rate in the second rate range. The apparatus further includes: the second declaration unit 304, configured to: send a third training bitstream to the first end, where the third training bitstream includes second declaration information; and receive first declaration information sent by the first end. The first declaration information includes information that the first end supports data transmission at any rate in the first rate range, and the second declaration information includes information that the second end supports data transmission at any rate in the second rate range.

In a possible implementation, the first rate is a highest rate in the target rate range.

In a possible implementation, the apparatus further includes: the eighth sending unit 305, configured to: before receiving, at the first rate over the first data link, the data sent by the first end, send a first response to the first end, where the first response includes response information corresponding to the second training bitstream.

In a possible implementation, a speed changing identifier indicates to adjust the transmission rate of the first data link.

The apparatus further includes: the seventh receiving unit 306, configured to: when a first bit error rate exceeds a preset range, receive, at a second rate over the first data link, the data sent by the first end, where the first bit error rate is a corresponding first bit error rate when the data is sent to the second end is at the first rate over the first data link, and the second rate is a rate in the target rate range and is less than the first rate.

The seventh receiving unit 306 is specifically configured to: receive a fourth training bitstream, where the fourth training bitstream includes the second rate; and receive, at the second rate over the first data link, the data sent by the first end.

In a possible implementation, the eighth sending unit 305 is further configured to send a second response to the first end, where the second response includes response information corresponding to the fourth training bitstream.

In a possible implementation, the fourth training bitstream further includes a speed changing identifier corresponding to the second rate.

In a possible implementation, the target rate range includes multiple target rate subranges, an intersection set of any two of the multiple target rate subranges is empty, and a union set of all of the multiple target rate subranges is the target rate range. The second rate is a rate in a first target rate subrange and is less than the first rate, or the second rate is any rate in a second target rate subrange. The first target rate subrange and the second target rate subrange belong to the multiple target rate subranges, the first target rate subrange includes the first rate, and a highest rate in the second target rate subrange is less than a lowest rate in the first target rate subrange.

The first training bitstream further includes a second step set, the second step set includes one or more second steps with different sizes, the second step is a step supported by the second end when the transmission rate of the first data link is adjusted, and the step is a unit for adjusting the transmission rate. The fourth training bitstream further includes adjustment information, the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

In a possible implementation, the first end corresponds to a first step set, the first step set includes one or more first steps with different sizes, and the first step is a step supported by the first end when the transmission rate of the first data link is adjusted. The target step is any step in a target step set, and the target step set is an intersection set of the first step set and the second step set.

In a possible implementation, the apparatus further includes: the ninth sending unit 307, configured to: send a fifth training bitstream to the first end, where the fifth training bitstream includes a third rate, and the third rate is a rate determined based on the target rate range; and receive, at the third rate over the first data link, the data sent by the first end.

In a possible implementation, the apparatus further includes: the second response unit 308, configured to receive a third response sent by the first end, where the third response includes response information corresponding to the fifth training bitstream.

In a possible implementation, data transmission is alternatively performed between the second end and the first end over a second data link, and the second data link is a serial data link or a parallel data link corresponding to the first data link. The second end corresponds to a fourth rate range, and the fourth rate range belongs to a transmission rate range supported when the second end sends data over the second data link. The apparatus further includes: the tenth sending unit 309, configured to send a sixth training bitstream to the first end, where the sixth training bitstream includes the fourth rate range; the eighth receiving unit 310, configured to receive a seventh training bitstream, where the seventh training bitstream includes a fourth rate, and the fourth rate belongs to the fourth rate range; and the ninth receiving unit 311, configured to receive, at the fourth rate over the second data link, the data sent by the second end.

In a possible implementation, the first end corresponds to a third rate range, and the third rate range is a transmission rate range supported when the first end receives the data over the second data link. The fourth rate is a rate determined based on a first target rate range, and the first target rate range is an intersection set of the third rate range and the fourth rate range.

In the foregoing embodiments, descriptions of embodiments have respective focuses. For a part that is not described in detail in an embodiment, refer to related descriptions in other embodiments.

It should be noted that, for brief description, the foregoing method embodiments are represented as a series of actions.

The foregoing units described as separate parts may or may not be physically separate, and parts displayed as units may or may not be physical units, may be located in one position, or may be distributed on multiple network units. Some or all of the units may be selected based on actual requirements to achieve objectives of the solutions of the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may specifically be a processor in the computer device) to perform all or some of the steps of the methods described in embodiments of this application. The foregoing storage medium includes any medium that can store program code, for example, a USB flash drive, a removable hard disk, a magnetic disk, an optical disc, a read-only memory (read-only memory, ROM for short), or a random access memory (random access memory, RAM for short).

## Claims

1. A wired data transmission method, applied at a first end (10), wherein data transmission is performed between the first end and a second end (20) over a first data link, the first data link is a serial data link or a parallel data link, and the method comprises:
receiving (102) a first training bitstream sent by the second end (20), wherein the first training bitstream is used by the second end to declare a second rate range to the first end, and the second rate range belongs to a transmission rate range supported when the second end receives data over the first data link;
sending (103) a second training bitstream to the second end (20), wherein the second training bitstream is used to notify the second end that the first end sends data to the second end at a first rate, or the second training bitstream is used to request the second end to receive data over the first data link at the first rate, and the first rate belongs to the second rate range; and
sending (104) the data to the second end (20) at the first rate over the first data link;
wherein the first end (10) corresponds to a first rate range, and the first rate range is a transmission rate range supported when the first end sends the data over the first data link; and
the first rate is a rate determined based on a target rate range, and the target rate range is an intersection set of the first rate range and the second rate range; and
the method further comprises:
obtaining a corresponding first bit error rate when the data is sent to the second end (20) at the first rate over the first data link;
when the first bit error rate is in a preset range, sending the data to the second end (20) at the first rate over the first data link;
when the first bit error rate exceeds the preset range, sending the data to the second end (20) at a second rate over the first data link, wherein the second rate is a rate in the target rate range and is less than the first rate; and
the sending the data to the second end (20) at a second rate over the first data link comprises:
sending a fourth training bitstream to the second end (20), wherein the fourth training bitstream is used to notify the second end that the first end sends data to the second end at the second rate, or the second training bitstream is used to request the second end to receive data over the first data link at the second rate; and
sending the data to the second end (20) at the second rate over the first data link;
wherein the first training bitstream further comprises a second step set, the second step set comprises one or more second steps with different sizes, the second step is a step supported by the second end (20) when the transmission rate of the first data link is adjusted, and the step is a unit for adjusting the transmission rate; and
the fourth training bitstream further comprises adjustment information, the adjustment information comprises one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

2. The method according to claim 1, wherein the second rate range is a transmission rate range supported when the second end (20) receives the data over the first data link; or
when the first end (10) is connected to the second end (20) via a repeater, the second rate range is a transmission rate range jointly supported by the second end and the repeater when the second end and the repeater transmit data over the first data link, and the repeater is configured to forward, to the second end, the data sent by the first end.

3. The method according to claim 1 or 2, wherein the first training bitstream further comprises second declaration information, the second declaration information comprises information that the second end supports data transmission at any rate in the second rate range, and the method further comprises:
sending a third training bitstream to the second end, wherein the third training bitstream comprises first declaration information, and the first declaration information comprises information that the first end (10) supports data transmission at any rate in the first rate range.

4. The method according to any one of claims 1 to 3, wherein the first rate is a highest rate in the target rate range.

5. The method according to any one of claims 1 to 4, wherein the second training bitstream further comprises a speed changing identifier corresponding to the first rate, and the speed changing identifier indicates to adjust a transmission rate of the first data link.

6. The method according to any one of claims 1 to 5, wherein the target rate range comprises multiple target rate subranges, an intersection set of any two of the multiple target rate subranges is empty, and a union set of all of the multiple target rate subranges is the target rate range;
the second rate is a rate in a first target rate subrange and is less than the first rate, or the second rate is any rate in a second target rate subrange; and
the first target rate subrange and the second target rate subrange belong to the multiple target rate subranges, the first target rate subrange comprises the first rate, and a highest rate in the second target rate subrange is less than a lowest rate in the first target rate subrange.

7. The method according to any one of claims 1 to 6, wherein the first end (10) corresponds to a first step set, the first step set comprises one or more first steps with different sizes, and the first step is a step supported by the first end when the transmission rate of the first data link is adjusted; and
the target step is any step in a target step set, and the target step set is an intersection set of the first step set and the second step set.

8. The method according to any one of claims 1 to 7, wherein the method further comprises:
receiving a fifth training bitstream sent by the second end (20), wherein the fifth training bitstream comprises a third rate, and the third rate is a rate determined based on the target rate range; and
sending the data to the second end (20) at the third rate over the first data link.

9. A computer program product, wherein the computer program product comprises a computer program, and when the computer program is executed by a computer or a processor, the computer or the processor is enabled to perform the method according to any one of claims 1 to 8.

10. A computer-readable storage medium, wherein the computer-readable storage medium stores a computer program, and when the computer program is executed by a computer or a processor, the method according to any one of claims 1 to 8.

11. A wired data transmission apparatus (100), wherein the wired data transmission apparatus is used at a first end (10), data transmission is performed between the first end and a second end (20) over a first data link, the first data link is a serial data link or a parallel data link, and the apparatus comprises:
a first receiving unit (201), configured to receive a first training bitstream sent by the second end (20), wherein the first training bitstream is used by the second end (20) to declare a second rate range to the first end (10), and the second rate range belongs to a transmission rate range supported when the second end receives data over the first data link;
a first sending unit (202), configured to send a second training bitstream to the second end (20), wherein the second training bitstream is used to notify the second end that the first end sends data to the second end at a first rate, or the second training bitstream is used to request the second end to receive data over the first data link at the first rate, and the first rate is any rate in the second rate range; and
a second sending unit (203), configured to send the data to the second end (20) at the first rate over the first data link;
wherein the first end (10) corresponds to a first rate range, and the first rate range is a transmission rate range supported when the first end (10) sends the data over the first data link, the first rate is a rate determined based on a target rate range, and the target rate range is an intersection set of the first rate range and the second rate range;
the apparatus further includes a first obtaining unit (206), configured to obtain a corresponding first bit error rate when the data is sent to the second end (20) at the first rate over the first data link;
the apparatus further includes a fourth sending unit (207), configured to: when the first bit error rate is in a preset range, send the data to the second end (20) at the first rate over the first data link;
the apparatus further includes a fifth sending unit (208), configured to: when the first bit error rate exceeds the preset range, send the data to the second end (20) at a second rate over the first data link, where the second rate is a rate in the target rate range and is less than the first rate;
the fifth sending unit (208) is specifically configured to: determine the second rate based on the target rate range and the first rate, and send a fourth training bitstream to the second end (20), where the fourth training bitstream is used to notify the second end that the first end sends data to the second end at a second rate, or the fourth training bitstream is used to request the second end to receive data over the first data link at the second rate;
the first training bitstream further includes a second step set, the second step set includes one or more second steps with different sizes, the second step is a step supported by the second end (20) when the transmission rate of the first data link is adjusted, and the step is a unit for adjusting the transmission rate; and
the fourth training bitstream further includes adjustment information, and the adjustment information includes one or more of the following: a target step, an adjustment direction, and an amount of adjustment performed on the target step, the target step is any step in the second step set, the adjustment direction is an addition direction or a subtraction direction, the adjustment amount is a total amount, corresponding to the target step, of adjustment to be performed on the target step, and the adjustment amount is a positive integer.

## Patentansprüche

1. Drahtgebundenes Datenübertragungsverfahren, das an einem ersten Ende (10) angewendet wird, wobei die Datenübertragung zwischen dem ersten Ende und einem zweiten Ende (20) über eine erste Datenverbindung durchgeführt wird, die erste Datenverbindung eine serielle Datenverbindung oder eine parallele Datenverbindung ist und das Verfahren Folgendes umfasst:
Empfangen (102) eines ersten Trainingsbitstroms, der durch das zweite Ende (20) gesendet wird, wobei der erste Trainingsbitstrom durch das zweite Ende verwendet wird, um dem ersten Ende einen zweiten Ratenbereich zu deklarieren, und der zweite Ratenbereich zu einem Übertragungsratenbereich gehört, der unterstützt wird, wenn das zweite Ende Daten über die erste Datenverbindung empfängt;
Senden (103) eines zweiten Trainingsbitstroms an das zweite Ende (20), wobei der zweite Trainingsbitstrom verwendet wird, um das zweite Ende zu benachrichtigen, dass das erste Ende Daten mit einer ersten Rate an das zweite Ende sendet, oder der zweite Trainingsbitstrom verwendet wird, um das zweite Ende aufzufordern, Daten über die erste Datenverbindung mit der ersten Rate zu empfangen, und die erste Rate zu dem zweiten Ratenbereich gehört; und
Senden (104) der Daten mit der ersten Rate über die erste Datenverbindung an das zweite Ende (20);
wobei das erste Ende (10) einem ersten Ratenbereich entspricht und der erste Ratenbereich ein Übertragungsratenbereich ist, der unterstützt wird, wenn das erste Ende die Daten über die erste Datenverbindung sendet; und
die erste Rate eine Rate ist, die auf Grundlage eines Zielratenbereichs bestimmt wird, und der Zielratenbereich eine Schnittmenge aus dem ersten Ratenbereich und dem zweiten Ratenbereich ist; und
wobei das Verfahren ferner Folgendes umfasst:
Erlangen einer entsprechenden ersten Bitfehlerrate, wenn die Daten mit der ersten Rate über die erste Datenverbindung an das zweite Ende (20) gesendet werden;
Senden der Daten mit der ersten Rate über die erste Datenverbindung an das zweite Ende (20), wenn die erste Bitfehlerrate in einem voreingestellten Bereich liegt;
Senden der Daten mit einer zweiten Rate über die erste Datenverbindung an das zweite Ende (20), wenn die erste Bitfehlerrate den voreingestellten Bereich überschreitet, wobei die zweite Rate eine Rate in dem Zielratenbereich ist und kleiner als die erste Rate ist; und
das Senden der Daten mit einer zweiten Rate über die erste Datenverbindung an das zweite Ende (20) Folgendes umfasst:
Senden eines vierten Trainingsbitstroms an das zweite Ende (20), wobei der vierte Trainingsbitstrom verwendet wird, um das zweite Ende zu benachrichtigen, dass das erste Ende Daten mit der zweiten Rate an das zweite Ende sendet, oder der zweite Trainingsbitstrom verwendet wird, um das zweite Ende aufzufordern, Daten mit der zweiten Rate über die erste Datenverbindung zu empfangen; und
Senden der Daten mit der zweiten Rate über die erste Datenverbindung an das zweite Ende (20);
wobei der erste Trainingsbitstrom ferner einen zweiten Schrittsatz umfasst, der zweite Schrittsatz einen oder mehrere zweite Schritte mit unterschiedlichen Größen umfasst, der zweite Schritt ein Schritt ist, der durch das zweite Ende (20) unterstützt wird, wenn die Übertragungsrate der ersten Datenverbindung eingestellt wird, und der Schritt eine Einheit zum Einstellen der Übertragungsrate ist; und
der vierte Trainingsbitstrom ferner Einstellungsinformationen umfasst, wobei die Einstellungsinformationen eines oder mehrere der Folgenden umfassen: einen Zielschritt, eine Einstellungsrichtung und einen Betrag der Einstellung, die an dem Zielschritt durchgeführt wird, wobei der Zielschritt ein beliebiger Schritt in dem zweiten Schrittsatz ist, die Einstellungsrichtung eine Additionsrichtung oder eine Subtraktionsrichtung ist, der Einstellungsbetrag ein Gesamtbetrag der an dem Zielschritt durchzuführenden Einstellung ist, der dem Zielschritt entspricht, und der Einstellungsbetrag eine positive ganze Zahl ist.

2. Verfahren nach Anspruch 1, wobei der zweite Ratenbereich ein Übertragungsratenbereich ist, der unterstützt wird, wenn das zweite Ende (20) die Daten über die erste Datenverbindung empfängt; oder
wenn das erste Ende (10) über einen Repeater mit dem zweiten Ende (20) verbunden ist, der zweite Ratenbereich ein Übertragungsratenbereich ist, der gemeinsam durch das zweite Ende und den Repeater unterstützt wird, wenn das zweite Ende und der Repeater Daten über die erste Datenverbindung übertragen, und der Repeater dazu konfiguriert ist, die durch das erste Ende gesendeten Daten an das zweite Ende weiterzuleiten.

3. Verfahren nach Anspruch 1 oder 2, wobei der erste Trainingsbitstrom ferner zweite Deklarationsinformationen umfasst, die zweiten Deklarationsinformationen Informationen darüber umfassen, dass das zweite Ende eine Datenübertragung mit einer jeglichen Rate in dem zweiten Ratenbereich unterstützt, und das Verfahren ferner Folgendes umfasst:
Senden eines dritten Trainingsbitstroms an das zweite Ende, wobei der dritte Trainingsbitstrom erste Deklarationsinformationen umfasst und die ersten Deklarationsinformationen Informationen darüber umfassen, dass das erste Ende (10) eine Datenübertragung mit einer jeglichen Rate in dem ersten Ratenbereich unterstützt.

4. Verfahren nach einem der Ansprüche 1 bis 3, wobei die erste Rate eine höchste Rate in dem Zielratenbereich ist.

5. Verfahren nach einem der Ansprüche 1 bis 4, wobei der zweite Trainingsbitstrom ferner eine Geschwindigkeitsänderungskennung umfasst, die der ersten Rate entspricht, und die Geschwindigkeitsänderungskennung angibt, dass eine Übertragungsrate der ersten Datenverbindung einzustellen ist.

6. Verfahren nach einem der Ansprüche 1 bis 5, wobei der Zielratenbereich mehrere Zielratenunterbereiche umfasst, eine Schnittmenge aus zwei beliebigen der mehreren Zielratenunterbereiche leer ist und ein Vereinigungssatz aller der mehreren Zielratenunterbereiche der Zielratenbereich ist;
die zweite Rate eine Rate in einem ersten Zielratenunterbereich ist und niedriger als die erste Rate ist oder die zweite Rate eine beliebige Rate in einem zweiten Zielratenunterbereich ist; und
der erste Zielratenunterbereich und der zweite Zielratenunterbereich zu den mehreren Zielratenunterbereichen gehören, der erste Zielratenunterbereich die erste Rate umfasst und eine höchste Rate in dem zweiten Zielratenunterbereich kleiner als eine niedrigste Rate in dem ersten Zielratenunterbereich ist.

7. Verfahren nach einem der Ansprüche 1 bis 6, wobei das erste Ende (10) einem ersten Schrittsatz entspricht, der erste Schrittsatz einen oder mehrere erste Schritte mit unterschiedlichen Größen umfasst und der erste Schritt ein Schritt ist, der durch das erste Ende unterstützt wird, wenn die Übertragungsrate der ersten Datenverbindung eingestellt wird; und
der Zielschritt ein beliebiger Schritt in einem Zielschrittsatz ist und der Zielschrittsatz eine Schnittmenge aus dem ersten Schrittsatz und dem zweiten Schrittsatz ist.

8. Verfahren nach einem der Ansprüche 1 bis 7, wobei das Verfahren ferner Folgendes umfasst:
Empfangen eines durch das zweite Ende (20) gesendeten fünften Trainingsbitstroms, wobei der fünfte Trainingsbitstrom eine dritte Rate umfasst und die dritte Rate eine Rate ist, die auf Grundlage des Zielratenbereichs bestimmt wird; und
Senden der Daten mit der dritten Rate über die erste Datenverbindung an das zweite Ende (20).

9. Computerprogrammprodukt, wobei das Computerprogrammprodukt ein Computerprogramm umfasst und, wenn das Computerprogramm durch einen Computer oder einen Prozessor ausgeführt wird, der Computer oder der Prozessor befähigt wird, das Verfahren nach einem der Ansprüche 1 bis 8 durchzuführen.

10. Computerlesbares Speichermedium, wobei das computerlesbare Speichermedium ein Computerprogramm speichert und, wenn das Computerprogramm durch einen Computer oder einen Prozessor ausgeführt wird, das Verfahren nach einem der Ansprüche 1 bis 8.

11. Drahtgebundene Datenübertragungsvorrichtung (100), wobei die drahtgebundene Datenübertragungsvorrichtung an einem ersten Ende (10) verwendet wird, die Datenübertragung zwischen dem ersten Ende und einem zweiten Ende (20) über eine erste Datenverbindung durchgeführt wird, die erste Datenverbindung eine serielle Datenverbindung oder eine parallele Datenverbindung ist und die Vorrichtung Folgendes umfasst:
eine erste Empfangseinheit (201), die dazu konfiguriert ist, einen ersten Trainingsbitstrom zu empfangen, der durch das zweite Ende (20) gesendet wird, wobei der erste Trainingsbitstrom durch das zweite Ende (20) verwendet wird, um dem ersten Ende (10) einen zweiten Ratenbereich zu deklarieren, und der zweite Ratenbereich zu einem Übertragungsratenbereich gehört, der unterstützt wird, wenn das zweite Ende Daten über die erste Datenverbindung empfängt;
eine erste Sendeeinheit (202), die dazu konfiguriert ist, einen zweiten Trainingsbitstrom an das zweite Ende (20) zu senden, wobei der zweite Trainingsbitstrom verwendet wird, um das zweite Ende zu benachrichtigen, dass das erste Ende Daten mit einer ersten Rate an das zweite Ende sendet, oder der zweite Trainingsbitstrom verwendet wird, um das zweite Ende aufzufordern, Daten über die erste Datenverbindung mit der ersten Rate zu empfangen, und die erste Rate eine beliebige Rate in dem zweiten Ratenbereich ist; und
eine zweite Sendeeinheit (203), die dazu konfiguriert ist, die Daten mit der ersten Rate über die erste Datenverbindung an das zweite Ende (20) zu senden;
wobei das erste Ende (10) einem ersten Ratenbereich entspricht und der erste Ratenbereich ein Übertragungsratenbereich ist, der unterstützt wird, wenn das erste Ende (10) die Daten über die erste Datenverbindung sendet, die erste Rate eine Rate ist, die auf Grundlage eines Zielratenbereichs bestimmt wird, und der Zielratenbereich eine Schnittmenge aus dem ersten Ratenbereich und dem zweiten Ratenbereich ist;
die Vorrichtung ferner eine erste Erlangungseinheit (206) beinhaltet, die dazu konfiguriert ist, eine entsprechende erste Bitfehlerrate zu erlangen, wenn die Daten mit der ersten Rate über die erste Datenverbindung an das zweite Ende (20) gesendet werden;
die Vorrichtung ferner eine vierte Sendeeinheit (207) beinhaltet, die zu Folgendem konfiguriert ist: Senden der Daten mit der ersten Rate über die erste Datenverbindung an das zweite Ende (20), wenn die erste Bitfehlerrate in einem voreingestellten Bereich liegt;
die Vorrichtung ferner eine fünfte Sendeeinheit (208) beinhaltet, die zu Folgendem konfiguriert ist: Senden der Daten mit einer zweiten Rate über die erste Datenverbindung an das zweite Ende (20), wenn die erste Bitfehlerrate den voreingestellten Bereich überschreitet, wobei die zweite Rate eine Rate in dem Zielratenbereich ist und niedriger als die erste Rate ist;
die fünfte Sendeeinheit (208) insbesondere zu Folgendem konfiguriert ist: Bestimmen der zweiten Rate auf Grundlage des Zielratenbereichs und der ersten Rate und Senden eines vierten Trainingsbitstroms an das zweite Ende (20), wobei der vierte Trainingsbitstrom verwendet wird, um dem zweiten Ende mitzuteilen, dass das erste Ende Daten mit einer zweiten Rate an das zweite Ende sendet, oder der vierte Trainingsbitstrom verwendet wird, um das zweite Ende aufzufordern, Daten mit der zweiten Rate über die erste Datenverbindung zu empfangen;
der erste Trainingsbitstrom ferner einen zweiten Schrittsatz beinhaltet, der zweite Schrittsatz einen oder mehrere zweite Schritte mit unterschiedlichen Größen beinhaltet, der zweite Schritt ein Schritt ist, der durch das zweite Ende (20) unterstützt wird, wenn die Übertragungsrate der ersten Datenverbindung eingestellt wird, und der Schritt eine Einheit zum Einstellen der Übertragungsrate ist; und
der vierte Trainingsbitstrom ferner Einstellungsinformationen beinhaltet und die Einstellungsinformationen eines oder mehrere der Folgenden beinhalten: einen Zielschritt, eine Einstellungsrichtung und einen Betrag der Einstellung, die an dem Zielschritt durchgeführt wird, wobei der Zielschritt ein beliebiger Schritt in dem zweiten Schrittsatz ist, die Einstellungsrichtung eine Additionsrichtung oder eine Subtraktionsrichtung ist, der Einstellungsbetrag ein Gesamtbetrag der an dem Zielschritt durchzuführenden Einstellung ist, der dem Zielschritt entspricht, und der Einstellungsbetrag eine positive ganze Zahl ist.

## Revendications

1. Procédé de transmission de données filaire, appliqué à une première extrémité (10), dans lequel la transmission de données est réalisée entre la première extrémité et une seconde extrémité (20) sur une première liaison de données, la première liaison de données est une liaison de données série ou une liaison de données parallèle, et le procédé comprend :
la réception (102) d'un premier flux binaire d'entraînement envoyé par la seconde extrémité (20), dans lequel le premier flux binaire d'entraînement est utilisé par la seconde extrémité pour déclarer une seconde plage de débit à la première extrémité, et la seconde plage de débit appartient à une plage de débit de transmission prise en charge lorsque la seconde extrémité reçoit des données sur la première liaison de données ;
l'envoi (103) d'un deuxième flux binaire d'entraînement à la seconde extrémité (20), dans lequel le deuxième flux binaire d'entraînement est utilisé pour notifier la seconde extrémité que la première extrémité envoie des données à la seconde extrémité à un premier débit, ou le deuxième flux binaire d'entraînement est utilisé pour demander à la seconde extrémité de recevoir des données sur la première liaison de données au premier débit, et le premier débit appartient à la seconde plage de débit ; et
l'envoi (104) des données à la seconde extrémité (20) au premier débit sur la première liaison de données ;
dans lequel la première extrémité (10) correspond à une première plage de débit, et la première plage de débit est une plage de débit de transmission prise en charge lorsque la première extrémité envoie les données sur la première liaison de données ; et
le premier débit est un débit déterminé sur la base d'une plage de débit cible, et la plage de débit cible est un ensemble d'intersection de la première plage de débit et de la seconde plage de débit ; et
le procédé comprend également :
l'obtention d'un premier débit d'erreur binaire correspondant lorsque les données sont envoyées à la seconde extrémité (20) au premier débit sur la première liaison de données ;
lorsque le premier débit d'erreur binaire est dans une plage prédéfinie, l'envoi des données à la seconde extrémité (20) au premier débit sur la première liaison de données ;
lorsque le premier débit d'erreur binaire dépasse la plage prédéfinie, l'envoi des données à la seconde extrémité (20) à un deuxième débit sur la première liaison de données, dans lequel le deuxième débit est un débit dans la plage de débit cible et est inférieur au premier débit ; et
l'envoi des données à la seconde extrémité (20) à un deuxième débit sur la première liaison de données comprend :
l'envoi d'un quatrième flux binaire d'entraînement à la seconde extrémité (20), dans lequel le quatrième flux binaire d'entraînement est utilisé pour notifier la seconde extrémité que la première extrémité envoie des données à la seconde extrémité au deuxième débit, ou le deuxième flux binaire d'entraînement est utilisé pour demander à la seconde extrémité de recevoir des données sur la première liaison de données au deuxième débit ; et
l'envoi des données à la seconde extrémité (20) au deuxième débit sur la première liaison de données ;
dans lequel le premier flux binaire d'entraînement comprend également un second ensemble d'étapes, le second ensemble d'étapes comprend une ou plusieurs secondes étapes de tailles différentes, la seconde étape est une étape prise en charge par la seconde extrémité (20) lorsque le débit de transmission de la première liaison de données est ajusté, et l'étape est une unité d'ajustement du débit de transmission ; et
le quatrième flux binaire d'entraînement comprend également des informations d'ajustement, les informations d'ajustement comprennent l'une ou plusieurs d'une étape cible, d'une direction d'ajustement et d'une quantité d'ajustement réalisée sur l'étape cible, l'étape cible est une étape quelconque du second ensemble d'étapes, la direction d'ajustement est une direction d'addition ou une direction de soustraction, la quantité d'ajustement est une quantité totale, correspondant à l'étape cible, d'ajustement à réaliser sur l'étape cible, et la quantité d'ajustement est un entier positif.

2. Procédé selon la revendication 1, dans lequel la seconde plage de débit est une plage de débit de transmission prise en charge lorsque la seconde extrémité (20) reçoit les données sur la première liaison de données ; ou
lorsque la première extrémité (10) est connectée à la seconde extrémité (20) par le biais d'un répéteur, la seconde plage de débit est une plage de débit de transmission prise en charge conjointement par la seconde extrémité et le répéteur lorsque la seconde extrémité et le répéteur transmettent des données sur la première liaison de données, et le répéteur est configuré pour transmettre, à la seconde extrémité, les données envoyées par la première extrémité.

3. Procédé selon la revendication 1 ou 2, dans lequel le premier flux binaire d'entraînement comprend également des secondes informations de déclaration, les secondes informations de déclaration comprennent des informations selon lesquelles la seconde extrémité prend en charge la transmission de données à un quelconque débit dans la seconde plage de débit, et le procédé comprend également :
l'envoi d'un troisième flux binaire d'entraînement à la seconde extrémité, dans lequel le troisième flux binaire d'entraînement comprend des premières informations de déclaration, et les premières informations de déclaration comprennent des informations selon lesquelles la première extrémité (10) prend en charge la transmission de données à un quelconque débit dans la première plage de débit.

4. Procédé selon l'une quelconque des revendications 1 à 3, dans lequel le premier débit est un débit le plus élevé dans la plage de débit cible.

5. Procédé selon l'une quelconque des revendications 1 à 4, dans lequel le deuxième flux binaire d'entraînement comprend également un identifiant de changement de vitesse correspondant au premier débit, et l'identifiant de changement de vitesse indique d'ajuster un débit de transmission de la première liaison de données.

6. Procédé selon l'une quelconque des revendications 1 à 5, dans lequel la plage de débit cible comprend de multiples sous-plages de débit cible, un ensemble d'intersection de deux quelconques des multiples sous-plages de débit cible est vide, et un ensemble d'union de toutes les multiples sous-plages de débit cible est la plage de débit cible ;
le deuxième débit est un débit dans une première sous-plage de débit cible et est inférieur au premier débit, ou le deuxième débit est un quelconque débit dans une seconde sous-plage de débit cible ; et
la première sous-plage de débit cible et la seconde sous-plage de débit cible appartiennent aux multiples sous-plages de débit cible, la première sous-plage de débit cible comprend le premier débit, et un débit le plus élevé dans la seconde sous-plage de débit cible est inférieur à un débit le plus bas dans la première sous-plage de débit cible.

7. Procédé selon l'une quelconque des revendications 1 à 6, dans lequel la première extrémité (10) correspond à un premier ensemble d'étapes, le premier ensemble d'étapes comprend une ou plusieurs premières étapes de tailles différentes, et la première étape est une étape prise en charge par la première extrémité lorsque le débit de transmission de la première liaison de données est ajusté ; et
l'étape cible est une quelconque étape dans un ensemble d'étapes cible, et l'ensemble d'étapes cible est un ensemble d'intersection du premier ensemble d'étapes et du second ensemble d'étapes.

8. Procédé selon l'une quelconque des revendications 1 à 7, dans lequel le procédé comprend également :
la réception d'un cinquième flux binaire d'entraînement envoyé par la seconde extrémité (20), dans lequel le cinquième flux binaire d'entraînement comprend un troisième débit, et le troisième débit est un débit déterminé sur la base de la plage de débit cible ; et
l'envoi des données à la seconde extrémité (20) au troisième débit sur la première liaison de données.

9. Produit de programme informatique, dans lequel le produit de programme informatique comprend un programme informatique, et lorsque le programme informatique est exécuté par un ordinateur ou un processeur, l'ordinateur ou le processeur est activé pour réaliser le procédé selon l'une quelconque des revendications 1 à 8.

10. Support de stockage lisible par ordinateur, dans lequel le support de stockage lisible par ordinateur stocke un programme informatique, et lorsque le programme informatique est exécuté par un ordinateur ou un processeur, le procédé selon l'une quelconque des revendications 1 à 8.

11. Appareil de transmission de données filaire (100), dans lequel l'appareil de transmission de données filaire est utilisé à une première extrémité (10), la transmission de données est réalisée entre la première extrémité et une seconde extrémité (20) sur une première liaison de données, la première liaison de données est une liaison de données série ou une liaison de données parallèle, et l'appareil comprend :
une première unité de réception (201), configurée pour recevoir un premier flux binaire d'entraînement envoyé par la seconde extrémité (20), dans lequel le premier flux binaire d'entraînement est utilisé par la seconde extrémité (20) pour déclarer une seconde plage de débit à la première extrémité (10), et la seconde plage de débit appartient à une plage de débit de transmission prise en charge lorsque la seconde extrémité reçoit des données sur la première liaison de données ;
une première unité d'envoi (202), configurée pour envoyer un deuxième flux binaire d'entraînement à la seconde extrémité (20), dans lequel le deuxième flux binaire d'entraînement est utilisé pour notifier la seconde extrémité que la première extrémité envoie des données à la seconde extrémité à un premier débit, ou le deuxième flux binaire d'entraînement est utilisé pour demander à la seconde extrémité de recevoir des données sur la première liaison de données au premier débit, et le premier débit est un quelconque débit dans la seconde plage de débit ; et
une deuxième unité d'envoi (203), configurée pour envoyer les données à la seconde extrémité (20) au premier débit sur la première liaison de données ;
dans lequel la première extrémité (10) correspond à une première plage de débit, et la première plage de débit est une plage de débit de transmission prise en charge lorsque la première extrémité (10) envoie les données sur la première liaison de données, le premier débit est un débit déterminé sur la base d'une plage de débit cible, et la plage de débit cible est un ensemble d'intersection de la première plage de débit et de la seconde plage de débit ;
l'appareil comporte également une première unité d'obtention (206), configurée pour obtenir un premier débit d'erreur binaire correspondant lorsque les données sont envoyées à la seconde extrémité (20) au premier débit sur la première liaison de données ;
l'appareil comporte également une quatrième unité d'envoi (207), configurée pour : lorsque le premier débit d'erreur binaire est dans une plage prédéfinie, envoyer les données à la seconde extrémité (20) au premier débit sur la première liaison de données ;
l'appareil comporte également une cinquième unité d'envoi (208), configurée pour : lorsque le premier débit d'erreur binaire dépasse la plage prédéfinie, envoyer les données à la seconde extrémité (20) à un deuxième débit sur la première liaison de données, où le deuxième débit est un débit dans la plage de débit cible et est inférieur au premier débit ;
la cinquième unité d'envoi (208) est spécifiquement configurée pour : déterminer le deuxième débit sur la base de la plage de débit cible et du premier débit, et envoyer un quatrième flux binaire d'entraînement à la seconde extrémité (20), où le quatrième flux binaire d'entraînement est utilisé pour notifier la seconde extrémité que la première extrémité envoie des données à la seconde extrémité à un deuxième débit, ou le quatrième flux binaire d'entraînement est utilisé pour demander à la seconde extrémité de recevoir des données sur la première liaison de données au deuxième débit ;
le premier flux binaire d'entraînement comporte également un second ensemble d'étapes, le second ensemble d'étapes comporte une ou plusieurs secondes étapes de tailles différentes, la seconde étape est une étape prise en charge par la seconde extrémité (20) lorsque le débit de transmission de la première liaison de données est ajusté, et l'étape est une unité d'ajustement du débit de transmission ; et
le quatrième flux binaire d'entraînement comporte également des informations d'ajustement, et les informations d'ajustement comportent l'une ou plusieurs d'une étape cible, d'une direction d'ajustement et d'une quantité d'ajustement réalisée sur l'étape cible, l'étape cible est une étape quelconque du second ensemble d'étapes, la direction d'ajustement est une direction d'addition ou une direction de soustraction, la quantité d'ajustement est une quantité totale, correspondant à l'étape cible, d'ajustement à réaliser sur l'étape cible, et la quantité d'ajustement est un entier positif.
